(19) Europäisches Patentamt
European Patent Office
Office européen des brevets

(11) **EP 4 557 575 A1**

(12) **EUROPEAN PATENT APPLICATION**
published in accordance with Art. 153(4) EPC

(43) Date of publication:
**21.05.2025 Bulletin 2025/21**

(51) International Patent Classification (IPC):
***H02J 50/00*** (2016.01)

(21) Application number: **23905275.6**

(52) Cooperative Patent Classification (CPC):
**H01F 27/28; H01F 27/34; H01F 38/14; H02J 7/00;
H02J 50/00; H02J 50/10; H02J 50/40; H02J 50/70;
H02J 50/90**

(22) Date of filing: **14.08.2023**

(86) International application number:
**PCT/CN2023/112931**

(87) International publication number:
**WO 2024/131096 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2022 CN 202211641708**

(71) Applicant: **Honor Device Co., Ltd.
Shenzhen, Guangdong 518040 (CN)**

(72) Inventors:
• **HUANG, Hua
Shenzhen, Guangdong 518040 (CN)**
• **SONG, Jiaxiang
Shenzhen, Guangdong 518040 (CN)**

(74) Representative: **MERH-IP Matias Erny Reichl
Hoffmann
Patentanwälte PartG mbB
Paul-Heyse-Straße 29
80336 München (DE)**

(54) **ELECTRONIC DEVICE AND WIRELESS CHARGING SYSTEM**

(57)     This application provides an electronic device and a wireless charging system, and relates to the technical field of electronic products, to resolve a problem of how to improve wireless charging efficiency when a coil size is limited. The electronic device includes a first coil board. The first coil board includes a first terminal, a second terminal, a first coil substrate, a first coil layer, and a second coil layer. The first coil layer includes a first coil part and a second coil part. The second coil layer includes a third coil part and a fourth coil part. At least part of the third coil part is connected in parallel with at least part of the first coil part to form a first parallel body. The second coil part, the fourth coil part, and the first parallel body are connected in series between the first terminal and the second terminal.

FIG. 9

# EP 4 557 575 A1

## Description

This application claims priority to Chinese Patent Application No. 202211641708.6, filed with the China National Intellectual Property Administration on December 20, 2022 and entitled "ELECTRONIC DEVICE AND WIRELESS CHARGING SYSTEM", which is incorporated herein by reference in its entirety.

## TECHNICAL FIELD

This application relates to the technical field of electronic products, and in particular, to an electronic device and a wireless charging system.

## BACKGROUND

A wireless charging technology is a technology in which the principle of electromagnetic induction is used to transmit power to an electric device. During power transmission, no charging cable is required, so that an advantage of being easy to use is achieved.

A power receiving coil is provided in the electric device, and is configured to match a charging coil in a charger to implement power transmission. In a charging system, to increase charging efficiency, a quantity of turns of the charging coil or the power receiving coil may be increased to improve mutual inductance between the charging coil and the power receiving coil, so as to improve wireless charging efficiency.

However, in some electronic devices, such as small electronic devices, due to limited internal space, increasing a quantity of turns of a coil is to increase volume occupied by the coil. This is not conducive to installation in the electronic device. The electronic device may be a charger or an electric device. As a result, in these electronic devices, it is difficult to further increase the quantity of turns of the coil. Based on this, how to improve the wireless charging efficiency when a coil size is limited is currently an important research direction for various manufacturers.

## SUMMARY

This application provides an electronic device and a wireless charging system, to fully use limited coil thickness space, a coil winding width, and the like when a coil size is limited, so as to obtain optimal impedance and a Q value, reduce coil loss, and improve wireless charging efficiency.

To achieve the foregoing objective, the following technical solutions are used in embodiments of this application:

According to a first aspect, an electronic device is provided. The electronic device includes a first coil module for wireless charging. The first coil module includes a first coil board. The first coil board includes a first terminal, a second terminal, a first coil substrate, a first coil layer, and a second coil layer.

The first coil substrate includes a first surface and a second surface facing away from each other.

The first coil layer is disposed on the first surface, and includes a first coil part and a second coil part disposed on a periphery of the first coil part. The first coil part includes at least one turn of a first coil, and an innermost turn of the first coil in the first coil part is an innermost turn of a coil in the first coil layer.

The second coil layer is disposed on the second surface, and includes a third coil part and a fourth coil part disposed on a periphery of the first coil part. The third coil part includes at least one turn of a third coil, and an innermost turn of the third coil in the third coil part is an innermost turn of a coil in the second coil layer.

At least part of the third coil part is connected in parallel with at least part of the first coil part to form a first parallel body. The second coil part, the fourth coil part, and the first parallel body are connected in series between the first terminal and the second terminal.

An inner diameter of the first coil layer is D11, an outer diameter of the first coil layer is D12, and an outer diameter D1 of the first coil part satisfies a condition: $D11 \leq D1 \leq (D11+D12)/2$. An inner diameter of the second coil layer is D21, an outer diameter of the second coil layer is D22, and an outer diameter D3 of the third coil part satisfies a condition: $D21 \leq D3 \leq (D21+D22)/2$.

In this way, impedance of the first coil board can be reduced, uneven distribution of induced currents in the first coil board can be mitigated, loss of the first coil board can be reduced, an optimal Q value can be obtained, and wireless charging efficiency can be improved. In addition, the second coil part, the fourth coil part, and the first parallel body are connected in series, and the second coil part and fourth coil part are not connected in parallel. In this way, a quantity of turns of coils connected in series between the first terminal and the second terminal can be maintained within a large quantity range, to ensure a mutual inductance value between the first coil module and the charging coil, so as to ensure wireless charging efficiency.

In a possible implementation of the first aspect, the at least one turn of the first coil respectively corresponds to the at least one turn of the third coil, each turn of the first coil is connected in parallel with a corresponding turn of the third coil to form the first parallel body, and the second coil part, the fourth coil part, and at least one first parallel body are connected in series between the first terminal and the second terminal. In this way, uneven distribution of coil currents can be effectively mitigated, and impedance can be reduced. In addition, a quantity of turns of the coils connected in series between the first terminal and the second terminal can be maintained within a large quantity range, to improve charging efficiency.

In a possible implementation of the first aspect, the at least one turn of the first coil and the at least one turn of the third coil are equal in quantity and in one-to-one correspondence, and each turn of the first coil is connected in parallel with the corresponding turn of the third coil to form the first parallel body. This structure is simple and convenient for alignment.

In a possible implementation of the first aspect, the at least one turn of the first coil is separated from each other. The at least one turn of the third coil is electrically connected from inside to outside, and two ends of each turn of the first coil are electrically connected to two ends of the corresponding turn of the third coil, respectively. In this way, at least one first parallel body formed by the at least one turn of the first coil and the at least one turn of the third coil implements series connection of two adjacent first parallel bodies through a second connection part between two adjacent turns of the third coil. This structure is simple and has a neat appearance.

In a possible implementation of the first aspect, the two ends of the third coil part are respectively a first end and a second end, the first end is located on an outermost turn of the third coil in the third coil part, the first end is electrically connected to an end of the fourth coil part facing the third coil part, and an end of the fourth coil part away from the third coil part is electrically connected to the first terminal. The second end is located on the innermost turn of the third coil in the third coil part, the second end is electrically connected to an end of the second coil part facing the first coil part, and an end of the second coil part away from the first coil part is electrically connected to the second terminal. In this way, the second coil part, the fourth coil part, and the at least one first parallel body are connected in series between the first terminal and the second terminal. This structure is simple and easy to implement.

In a possible implementation of the first aspect, the innermost turn of the first coil in the first coil part corresponds to the innermost turn of the third coil, and an end of the innermost turn of the first coil electrically connected to the second end is a third end. In a peripheral direction of the first coil part, a first spacing is formed between both ends of each turn of the first coil. Based on this, the first coil board further includes a first connection part. The first connection part is disposed on the first surface and penetrates the first spacing. One end of the first connection part is electrically connected to the third end, and the other end of the first connection part is electrically connected to the end of the second coil part facing the first coil part. In this way, a plated through hole between the third end and the second end, and the first connection part are used to implement electrical connection between the second end and the end of the second coil part facing the first coil part, so that intersection of metal layers on the first surface can be avoided, to ensure the neat appearance.

In a possible implementation of the first aspect, the first coil part includes a first turn of the first coil, and the third coil part includes a second turn of the third coil. The first turn of the first coil includes a first coil segment and a second coil segment, and the first coil segment and the second coil segment are arranged in a peripheral direction of the first turn of the first coil. The first coil segment includes a first inner coil part and a first outer coil part, and the first outer coil part is located outside the first inner coil part. The second coil segment includes a second inner coil part and a second outer coil part, and the second outer coil part is located outside the second inner coil part. The second turn of the third coil includes a third coil segment and a fourth coil segment, the third coil segment corresponds to the first coil segment, and the fourth coil segment corresponds to the second coil segment. The third coil segment includes a third inner coil part and a third outer coil part, and the third outer coil part is located outside the third inner coil part. The fourth coil segment includes a fourth inner coil part and a fourth outer coil part, and the fourth outer coil part is located outside the fourth inner coil part. An end of the first outer coil part facing the second outer coil part is electrically connected to an end of the second inner coil part facing the first inner coil part, an end of the third outer coil part facing the fourth outer coil part is electrically connected to the end of the first outer coil part facing the second outer coil part, and an end of the fourth inner coil part facing the third inner coil part is electrically connected to the end of the second inner coil part facing the first inner coil part. An end of the third inner coil part facing the fourth inner coil part is electrically connected to an end of the fourth outer coil part facing the third outer coil part, an end of the first inner coil part facing the second inner coil part is electrically connected to the end of the third inner coil part facing the fourth inner coil part, and an end of the second outer coil part facing the first outer coil part is electrically connected to the end of the fourth outer coil part facing the third outer coil part. In this way, a turn of the first coil in the first coil part is formed by splicing a plurality of parts, and a turn of the third coil in the third coil part is also formed by splicing a plurality of parts. In addition, a turn of the first coil and a corresponding turn of the third coil form an inner-outer cross structure, to further mitigate uneven distribution of currents between an inner layer and an outer layer, so as to further reduce impedance.

In a possible implementation of the first aspect, the first coil layer further includes a fifth coil part disposed on a periphery of the second coil part, the fifth coil part includes at least one turn of a fifth coil, and an outermost turn of the fifth coil in the fifth coil part forms an outermost turn of the coil in the first coil layer. The second coil further includes a sixth coil part disposed on a periphery of the fourth coil part, the sixth coil part includes at least one turn of a sixth coil, and an outermost turn of the sixth coil in the sixth coil part forms an outermost turn of the coil in the second coil layer. At least part of the sixth coil part is connected in parallel with at least part of the fifth coil part to form a second parallel body, and the second coil part, the fourth coil part, the first parallel body, and the second parallel body are connected in series. An inner diameter D5 of the fifth coil part satisfies a condition: $(D11+D12)/3 \leq D5 \leq D12$. An inner diameter D6 of the sixth coil part satisfies a condition: $(D21+D22)/3 \leq D6 \leq D22$. In this way, the impedance of the first coil board can be further reduced, the uneven distribution the induced currents in the first coil board can be mitigated, and the wireless charging efficiency can be improved.

In a possible implementation of the first aspect, the at least one turn of the fifth coil respectively corresponds to the at least one turn of the sixth coil, and each turn of the fifth coil is connected in parallel with a corresponding turn of the sixth coil to form the second parallel body. The second coil part, the fourth coil part, the first parallel body, and at least one second parallel body are connected in series between the first terminal and the second terminal. In this way, the uneven distribution of the coil currents can be effectively mitigated, and the impedance can be reduced.

In a possible implementation of the first aspect, the at least one turn of the fifth coil and the at least one turn of the sixth coil are equal in quantity and in one-to-one correspondence, and each turn of the fifth coil is connected in parallel with the corresponding turn of the sixth coil to form the second parallel body. This structure is simple and convenient for alignment.

In a possible implementation of the first aspect, the at least one turn of the fifth coil is separated from each other. The at least one turn of the sixth coil is electrically connected from inside to outside, and two ends of each turn of the fifth coil are electrically connected to two ends of the corresponding turn of the sixth coil, respectively. In this way, at least one second parallel body formed by the at least one turn of the fifth coil and the at least one turn of the sixth coil implements series connection through a connection part between two adjacent turns of the sixth coil. This structure is simple and has a neat appearance.

In a possible implementation of the first aspect, the two ends of the sixth coil part are respectively a fourth end and a fifth end, the fourth end is located on an innermost turn of the sixth coil in the sixth coil part, and the fourth end is electrically connected to an end of the fourth coil part away from the third coil part. The fifth end is located on the outermost turn of the sixth coil in the sixth coil part, and the fifth end is electrically connected to the first terminal. In this way, the at least one second parallel body formed by the at least one turn of the fifth coil and the at least one turn of the sixth coil is connected in series between the fourth coil part and the first terminal. This structure is simple and easy to be implemented.

In a possible implementation of the first aspect, the first terminal and the second terminal are disposed on the first surface and located outside the first coil layer.

In a possible implementation of the first aspect, the first terminal and the second terminal are disposed on the first surface and located inside the first coil layer.

In a possible implementation of the first aspect, the first coil module further includes a second coil board. The second coil board is stacked with the first coil board, the second coil board includes a third terminal and a fourth terminal, and the third terminal is electrically connected to the second terminal. In this way, a quantity of turns of coils in the first coil module can be increased, facilitating improving mutual inductance and the charging efficiency.

In a possible implementation of the first aspect, the third terminal and the second terminal are integrally formed. Alternatively, the third terminal is electrically connected to the second terminal through a solder joint.

In a possible implementation of the first aspect, the electronic device further includes a first magnetic isolation sheet. The first magnetic isolation sheet is located at one side of the first coil module and is stacked with the first coil module. The first magnetic isolation sheet is configured to prevent a metal conductor at one side of the first coil module from causing a charging magnetic field to be attenuated, so that metal isolation is achieved, energy waste is avoided, and the charging efficiency is improved.

In a possible implementation of the first aspect, relative magnetic permeability of a material of the first magnetic isolation sheet is greater than or equal to 100. Optionally, the material of the first magnetic isolation sheet includes at least one of ferrite, nanocrystalline, amorphous, silicon steel, permalloy, nickel, neodymium-iron-boron alloy, samarium, aluminum-nickel-cobalt alloy, and aluminum-iron-silicon alloy.

In a possible implementation of the first aspect, the electronic device further includes a first magnet. An orthographic projection of the first magnet on the first coil board is located in an area surrounded by the first coil layer and the second coil layer. The first magnet is configured to attract a magnet in a charger to implement alignment between the first coil module and a charging coil in the charger.

According to a second aspect, a charging system is provided. The charging system includes an electric device and a charger. The electric device is the electronic device described in any one of the foregoing technical solutions. The charger includes a second coil module, and the second coil module is configured to charge in cooperation with the first coil module.

Because the charging system provided in this application includes the electric device, and the electric device is the electronic device described in any one of the foregoing technical solutions, the charging system and the electric device can resolve a same problem and achieve a same effect.

In a possible implementation of the second aspect, the charger further includes a second magnetic isolation sheet. The second magnetic isolation sheet is located at one side of the second coil module and is stacked with the second coil module.

In a possible implementation of the second aspect, the charger further includes a second magnet. An orthographic projection of the second magnet on a plane where the second coil module is located is located in an area surrounded by a coil in the second coil module.

In a possible implementation of the second aspect, the second magnet includes a central magnet and an outer-ring magnet. The central magnet includes a fifth surface and a sixth surface opposite to each other, and a direction from the fifth surface to the sixth surface is consistent with a direction from the first magnetic isolation sheet to the first coil module. A magnetizing direction of the central magnet is parallel to the direction from the fifth surface to the sixth surface. The outer-ring magnet is located on a peripheral side of the magnetizing direction of the central magnet, the outer-ring magnet is magnetized from one end away from the central magnet to an end facing the central magnet, and a magnetic pole of the end of the outer-ring magnet facing the central magnet is the same as a magnetic pole of an end of the central magnet where the sixth surface is located. In this way, the second magnet can concentrate magnetic field directions to avoid magnetic field diffusion, reduce an impact of a magnetic field on the first magnetic isolation sheet, and avoid magnetic saturation of the first magnetic isolation sheet due to an excessive magnetic field at a location of the first magnetic isolation sheet, so that the first magnetic isolation sheet can be prevented from losing a magnetic isolation capability. In addition, a thickness of the first magnetic isolation sheet can be reduced to reserve more height design space for the first coil module in the electronic device, so as to increase a quantity of layers of a coil board in the first coil module to facilitate increasing a quantity of turns of the coil, thereby improving the mutual inductance and the charging efficiency. Moreover, because the magnetic pole of the end of the outer-ring magnet facing the central magnet is the same as the magnetic pole of the end of the central magnet where the sixth surface is located, the sixth surface is a magnetic field enhancement surface. Based on this, because the sixth surface faces the magnet in the charger, magnetic attraction between the magnet and the magnet in the charger can be enhanced to ensure positioning accuracy.

In a possible implementation of the second aspect, there are a plurality of outer-ring magnets, and the plurality of outer-ring magnets are evenly arranged around the magnetizing direction of the central magnet. This structure is simple and the outer-ring magnet is less difficult to form.

## BRIEF DESCRIPTION OF DRAWINGS

FIG. 1 is a schematic diagram of a structure of a wireless charging system according to some embodiments of this application;
FIG. 2 is a schematic diagram of a structure of an electronic device according to some embodiments of this application;
FIG. 3 is an exploded view of a watch body in the electronic device shown in FIG. 2;
FIG. 4 is a space diagram of a charging assembly in the watch body shown in FIG. 3;
FIG. 5 is an exploded view of the charging assembly shown in FIG. 4;
FIG. 6 is a block diagram of a partial circuit of the electronic device shown in FIG. 3;
FIG. 7 is a space diagram of a first coil module in the charging assembly shown in FIG. 5;
FIG. 8 is an exploded view of the first coil module shown in FIG. 7;
FIG. 9 is a further exploded view of a first coil board in the first coil module shown in FIG. 8;
FIG. 10 is a schematic diagram of a structure of a first coil module according to a related technology;
FIG. 11 is a schematic diagram of a cross-sectional structure of the first coil module shown in FIG. 10 taken along line B-B;
FIG. 12 is a diagram of electric field distribution of a first coil layer, a second coil layer, a third coil layer, and a fourth coil layer in the first coil module shown in FIG. 11 during charging;
FIG. 13 is a schematic diagram of an electrical connection path between a first turn of a first coil and a second turn of a third coil in the first coil module shown in FIG. 9;
FIG. 14 is an exploded view of a first coil module according to some other embodiments of this application;
FIG. 15 is a schematic diagram of a cross-sectional structure of the first coil module shown in FIG. 7 taken along line A-A;
FIG. 16 is a further exploded view of a second coil board in the first coil module shown in FIG. 8;
FIG. 17 is a schematic diagram of a structure of a first coil module in an expanded state according to some embodiments of this application;
FIG. 18 is a current simulation diagram of the first coil module shown in FIG. 7;
FIG. 19 is a space diagram of a charger according to some embodiments of this application;
FIG. 20 is a schematic diagram of a cross-sectional structure of the charger shown in FIG. 19 taken along line C-C;
FIG. 21 is a schematic diagram of a structure of the charger shown in FIG. 20 during charging an electronic device;
FIG. 22 is a space diagram of a second magnet according to some embodiments of this application;
FIG. 23 is a schematic diagram of a cross-sectional structure of the second magnet shown in FIG. 22 taken along line D-D;

FIG. 24 is a diagram of magnetic pole distribution and magnetic field distribution of a conventional magnet according to some embodiments of this application;

FIG. 25 is a diagram of magnetic field distribution of a first magnetic isolation sheet when the second magnet in the charger in a charging system shown in FIG. 21 is of the conventional structure shown in FIG. 24;

FIG. 26 is a diagram of magnetic field distribution of the second magnet shown in FIG. 23;

FIG. 27 is a diagram of magnetic field distribution of a first magnetic isolation sheet when the second magnet in the charger in a charging system shown in FIG. 21 is of an improved structure shown in FIG. 23;

FIG. 28 is a space diagram of a central magnet according to some other embodiments of this application;

FIG. 29 is a diagram of magnetic pole distribution of the central magnet shown in FIG. 28.

FIG. 30 is a space diagram of a second magnet according to some other embodiments of this application;

FIG. 31 is a space diagram of a second magnet according to some other embodiments of this application;

FIG. 32 is a space diagram of a second magnet according to some other embodiments of this application;

FIG. 33 is a space diagram of a second magnet according to some other embodiments of this application;

FIG. 34 is a space diagram of a second magnet according to some other embodiments of this application;

FIG. 35 is a space diagram of six second magnets according to some other embodiments of this application.

## DESCRIPTION OF EMBODIMENTS

In embodiments of this application, the terms "first", "second", "third", "fourth", "fifth", and "sixth" are used merely for the purpose of description, and shall not be construed as indicating or implying relative importance or implying a quantity of indicated technical features. Therefore, features defining "first", "second", "third", "fourth", "fifth", and "sixth" may explicitly or implicitly include one or more such features.

In embodiments of this application, the terms "include", "comprise", and any variants thereof are intended to cover a non-exclusive inclusion. Therefore, a process, method, object, or apparatus that includes a series of elements not only includes such elements, but also includes other elements not specified expressly, or may include inherent elements of the process, method, object, or apparatus. Without more limitations, elements defined by the sentence "including one..." does not exclude that there are still other same elements in the process, method, object, or apparatus which includes the element.

In embodiments of this application, it should be noted that the description "parallel" means that approximately parallel within a specific error range is allowed, and the error range may be a range where a deviation angle is less than or equal to 5° relative to absolute parallelism. The description "consistent" in direction means that approximately consistency within a specific error range is allowed, and the error range may be a range where a deviation angle is less than or equal to 5° relative to absolute consistency.

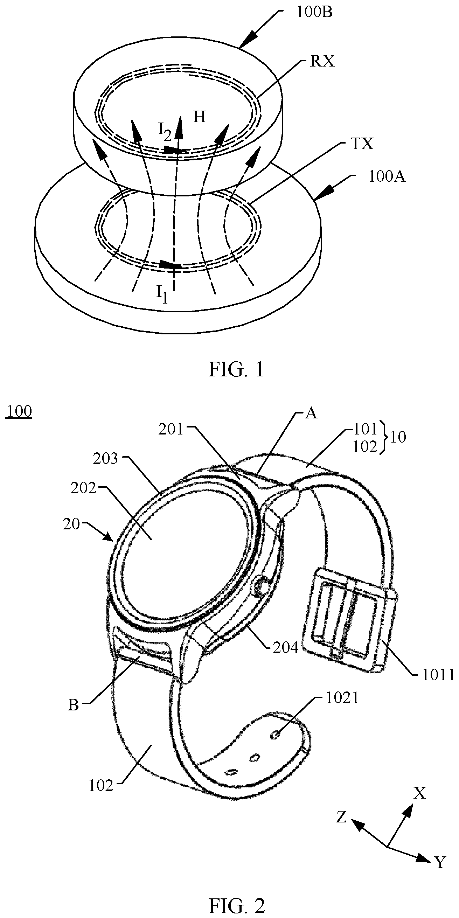

A wireless charging process requires a transmit end and a receive end. FIG. 1 is a schematic diagram of a structure of a wireless charging system according to some embodiments of this application. The wireless charging system includes a charger 100A and an electric device 100B. The charger 100A is a transmit end, and the electric device 100B is a receive end. The charger 100A has a built-in charging coil TX, and the electric device 100B has a built-in power receiving coil RX.

During charging, still refer to FIG. 1. A plane where the charging coil TX is located is parallel to a plane where the power receiving coil RX is located, and an area surrounded by the charging coil TX is at least partially opposite to an area surrounded by the power receiving coil RX.

When an alternating current $I_1$ flows into the charging coil TX, an alternating magnetic field H is generated around the charging coil TX. Magnetic induction lines of the magnetic field H at least partially pass through the area surrounded by the power receiving coil RX. Based on this, according to the electromagnetic induction principle, an alternating current $I_2$ can be generated by induction in the power receiving coil RX, to implement wireless transmission of electric energy. In this charging manner, a charging cable connection is not needed, so that the manner is convenient, safe, and reliable to use.

In a charging system, to increase charging efficiency, a quantity of turns of the charging coil TX or the power receiving coil RX may be increased to increase mutual inductance M between the charging coil TX and the power receiving coil RX, and $M = K\sqrt{L_1 * L_2}$. K represents a coupling coefficient, L1 represents self-inductance of the charging coil TX, and L2 represents self-inductance of the power receiving coil RX. Therefore, the charging efficiency of the charging system is improved.

However, in some electronic devices, such as small electronic devices, due to limited internal space, increasing a quantity of turns of an internal coil is to increase volume occupied by the coil. This is not conducive to installation in the electronic device. As a result, in these electronic devices, it is difficult to further increase the quantity of turns of the coil. The electronic device may be the charger 100A or the electric device 100B.

To resolve the foregoing technical problem, this application provides an electronic device. The electronic device may be the charger 100A or the electric device 100B. The following embodiments use an example in which the electronic device is the electric device 100B for description.

Specifically, when the electronic device is the electric device 100B, the electronic device includes, but is not limited to, a mobile phone, a tablet personal computer (tablet personal computer), a laptop computer (laptop computer), a personal digital assistant (personal digital assistant, PDA), a personal computer, a notebook computer, a wearable device, a personal stereo, a radio, and the like. The wearable device includes, but are not limited to, a smart watch, a smart bracelet, smart clothes, smart glasses, and smart headphones. The following embodiments use an example in which the electronic device is the smart watch for description.

FIG. 2 is a schematic diagram of a structure of an electronic device 100 according to some embodiments of this application. The electronic device 100 includes a watch body 20 and a watchband 10. The watch body 20 is configured to implement a main function of the smart watch, and the watchband 10 is configured for wearing the watch body 20 on a wrist of a human body.

In some embodiments, still refer to FIG. 2. The watchband 10 may include a first watchband part 101 and a second watchband part 102. One end of the first watchband part 101 and one end of the second watchband part 102 are connected to opposite ends of the watch body 20. A first locking part 1011 is disposed at the other end of the first watchband part 101, and a second locking part 1021 is disposed at the other end of the second watchband part 102. The first locking part 1011 and the second locking part 1021 are detachably locked to each other, so that the watch body 20 can be worn on the wrist of the human body.

A mating structure formed by the first locking part 1011 and the second locking part 1021 may be a buckle structure such as a hook buckle, a concealed buckle, a butterfly buckle, a belt buckle, a foldable safety buckle, a foldable buckle, a pin buckle, or the like. This is not specifically limited in this application.

The following mainly describes the watch body 20.

Still refer to FIG. 2. The watch body 20 is substantially disc-shaped. Based on this, to facilitate descriptions of the following embodiments, an XYZ coordinate system is established for the watch body 20 described in this embodiment and the following embodiments. Specifically, a thickness direction of the watch body 20 is defined as a Z-axis direction, and a plane perpendicular to the Z-axis direction is defined as an XY plane. A position on the watch body 20 for connecting the first watchband part 101 is a first position A, and a position on the watch body 20 for connecting the second watchband part 102 is a second position B. The first position A and the second position B are located in the XY plane. Based on this, a direction for arranging the first position A and the second position B is defined as an X-axis direction, and a direction in the XY plane perpendicular to the X-axis direction is defined as a Y-axis direction. It may be understood that the coordinate system of the watch body 20 may be flexibly set based on an actual requirement. This is not specifically limited herein. In some other embodiments, the watch body 20 may alternatively be roughly in a shape of an elliptical disk, a triangular disk, a polygonal disk, or a rectangular disk. This is not specifically limited herein.

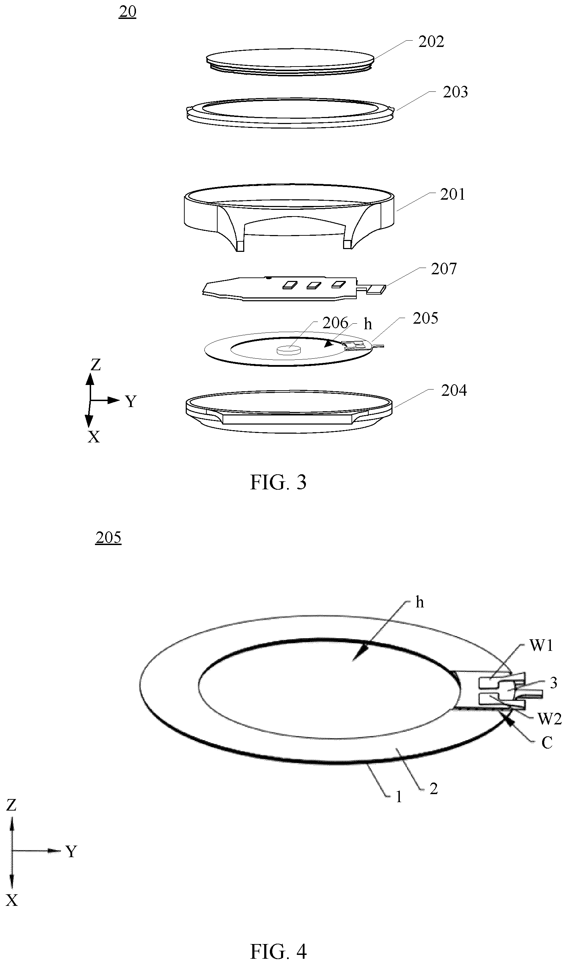

Refer to FIG. 2 and FIG. 3 together. FIG. 3 is an exploded view of the watch body 20 in the electronic device 100 shown in FIG. 2. The watch body 20 includes a main body 201, a screen 202, an upper watch housing 203, a lower watch housing 204, a battery (not shown in FIG. 3), a charging assembly 205, a first magnet 206, and a circuit board assembly 207.

It may be understood that FIG. 2 and FIG. 3 schematically show some components included in the watch body 20. Actual shapes, sizes, positions, and configurations of these components are not limited in FIG. 2 and FIG. 3. In other embodiments, the watch body 20 may further include a detection device such as an electrocardiogram (electrocardiogram, ECG) electrode and a photoplethysmograph (photoplethysmograph, PPG) device.

The main body 201 is a support frame of the watch body 20, and the first position A and the second position B are located on the main body 201. A material of the main body 201 may be stainless steel, to ensure structural strength of the main body 201 and support strength for other components.

The upper watch housing 203 is connected to one end of the main body 201 in the Z-axis direction, and the lower watch housing 204 is connected to the other end of the main body 201 in the Z-axis direction. The upper watch housing 203, the main body 201, and the lower watch housing 204 constitute a housing of the watch body 20. An interior of the housing forms accommodation space. The battery, the charging assembly 205, the first magnet 206, and the circuit board assembly 207 are accommodated in the accommodation space.

A material of the upper watch housing 203 includes, but is not limited to, a metal material such as stainless steel and plastic such as polycarbonate (polycarbonate, PC), PC+ glass fiber, and ABS plastic (acrylonitrile butadiene styrene plastic).

A material of the lower watch housing 204 may be a non-metallic material, to allow the charging assembly 205 to receive electricity from outside of the lower watch housing 204. The outside of the lower watch housing 204 is a side of the lower watch housing 204 facing away from the accommodation space.

The screen 202 is fixed to the upper watch housing 203. The screen 202 is configured to display an hour hand, a minute hand, a second hand, a dial, digital time, weather, temperature, an ECG signal, human body temperature, a heart rate, body fat, a voltage, and another numerical value or graphic.

The battery is a rechargeable battery. Specifically, the battery includes, but is not limited to, a lead-acid battery, a nickel-cadmium battery, a nickel-metal hydride battery, a lithium-ion battery, or a lithium-polymer battery. The battery is configured to supply power to an electronic component such as the screen 202 and the circuit board assembly 207, and the battery is also configured to store electricity from the charging assembly 205.

The charging assembly 205 receives electricity from a charger according to the electromagnetic induction principle and stores the received electricity in the battery. In other embodiments, when the electronic device 100 is a charger, the charging assembly 205 is also configured to transmit electricity to the electric device.

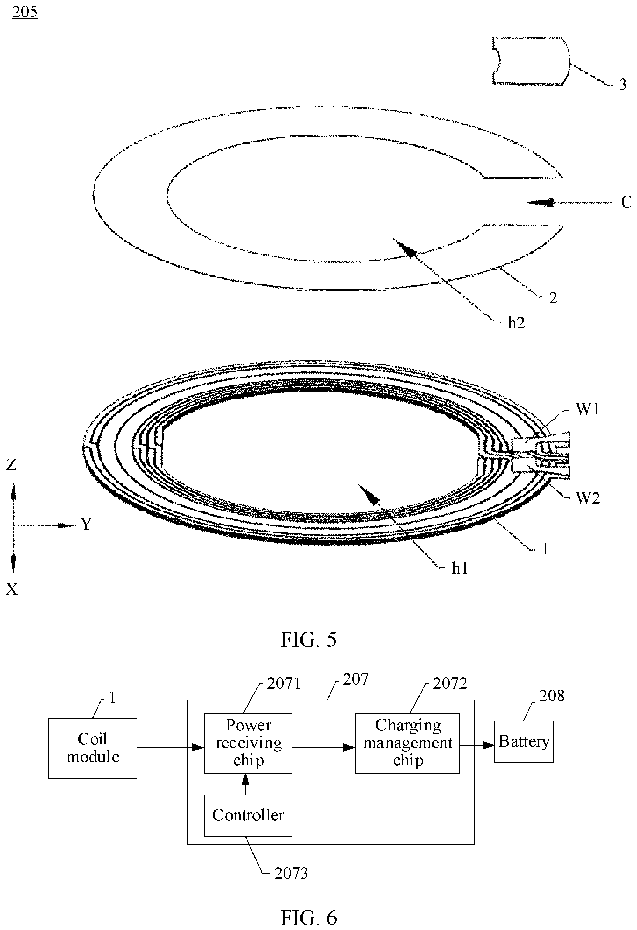

Refer to FIG. 4 and FIG. 5. FIG. 4 is a space diagram of the charging assembly 205 in the watch body 20 shown in FIG. 3. FIG. 5 is an exploded view of the charging assembly 205 shown in FIG. 4.

The charging assembly 205 includes a first coil module 1, a first magnetic isolation sheet 2, and a reinforcement plate 3.

The first coil module 1 is a main body for receiving electricity, and the first coil module 1 is a conductive wire wound along a circular extension track. In some embodiments, when the charging assembly 205 is used in the electronic device 100 shown in FIG. 3, the first coil module 1 is stacked with a bottom plate of the lower watch housing 204. In other words, a plane where the circular extension track of the conductive wire in the first coil module 1 is located is parallel to the bottom plate of the lower watch housing 204. The bottom plate of the lower watch housing 204 is a plate-shaped part of the lower watch housing 204 that is farthest from the screen 202. There may be a spacing between the first coil module 1 and the bottom plate of the lower watch housing 204, or the first coil module 1 and the bottom plate of the lower watch housing 204 may be in direct contact. In this way, the first coil module 1 can receive electricity from the outside of the lower watch housing 204. In other embodiments, when the charging assembly 205 is used in the electronic device 100 shown in FIG. 3, the first coil module 1 may alternatively be stacked with the screen 202 or the upper watch housing 203, to receive electricity from outside of the screen 202 or outside of the upper watch housing 203, respectively. The outside of the screen 202 is a side of the screen 202 facing away from the accommodation space. The outside of the upper watch housing 203 is a side of the upper watch housing 203 facing away from the accommodation space.

Refer to FIG. 4 and FIG. 5. The first magnetic isolation sheet 2 is stacked with the first coil module 1. In other words, the first magnetic isolation sheet 2 is parallel to the plane where the circular extension track of the conductive wire in the first coil module 1 is located. There may be a spacing between the first magnetic isolation sheet 2 and the first coil module 1, or the first magnetic isolation sheet 2 and the first coil module 1 may be in direct contact. When the charging assembly 205 is used in the electronic device 100 shown in FIG. 3, the first magnetic isolation sheet 2 may be located at one side of the first coil module 1 facing away from the lower watch housing 204. The first magnetic isolation sheet 2 is configured to prevent a metal conductor at the side of the first coil module 1 facing away from the lower watch housing 204 from causing a charging magnetic field to be attenuated, so that metal isolation is achieved, energy waste is avoided, and the charging efficiency is improved.

The first magnetic isolation sheet 2 may include a soft magnetic material. Relative magnetic permeability of the material of the first magnetic isolation sheet may be greater than or equal to 100. For example, the first magnetic isolation sheet 2 may include at least one of ferrite, nanocrystalline, and amorphous. The first magnetic isolation sheet 2 may alternatively include another soft magnetic material. For example, the first magnetic isolation sheet 2 may include at least one of materials such as silicon steel, permalloy (Ni-Fe), nickel, neodymium-iron-boron alloy (Nd-Fe-B), samarium, aluminum-nickel-cobalt alloy (Al-Ni-Co), and aluminum-iron-silicon alloy (Fe-Si-Al).

In some embodiments, refer to FIG. 3 and FIG. 4 together. The charging assembly 205 has an inner hole h. The inner hole h is used for avoiding an ECG electrode, a PPG device, and the first magnet 206 to avoid position interference.

In some embodiments, refer to FIG. 5. The inner hole h includes a first inner hole part h1 and a second inner hole part h2. The first inner hole part h1 is provided in the first coil module 1, and the conductive wire in the first coil module 1 surrounds the first inner hole part h1. The second inner hole part h2 is communicated with the first inner hole part h1, and the second inner hole part h2 is provided on the first magnetic isolation sheet 2.

Refer to FIG. 4 and FIG. 5, the first coil module 1 includes a first external terminal W1 and a second external terminal W2. The first external terminal W1 and the second external terminal W2 are respectively disposed at two ends of the first coil module 1, and the first external terminal W1 and the second external terminal W2 are configured to be electrically connected to the circuit board assembly 207 in FIG. 3 to transmit an alternating current generated by the first coil module 1 by induction to the circuit board assembly 207.

Based on this, refer to FIG. 4 in particular. The reinforcement plate 3 and the first magnetic isolation sheet 2 are located on a same side of the first coil module 1, and the reinforcement plate 3 is stacked with the first coil module 1. The first external terminal W1 and the second external terminal W2 are folded from an outer edge of the first coil module 1 to one side of the reinforcement plate 3 facing away from the first coil module 1, and fixed to a surface of the reinforcement plate 3 facing away from the first coil module 1. The reinforcement plate 3 is configured to reinforce the first external terminal W1 and the second external terminal W2, so as to implement electrical connection between the first external terminal W1, the second external terminal W2, and the circuit board assembly 207 through spring contact, elastic ejector contact, and flat metal contact. A material of the reinforcement plate 3 may include at least one of polyimide (polyimide, PI), PC, PC+ glass fiber, and ABS plastic.

In some embodiments, refer to FIG. 4 and FIG. 5 together. A gap C is provided on the first magnetic isolation sheet 2, and the reinforcement plate 3 is disposed in the gap C. This avoids overlap of thickness of the first magnetic isolation sheet 2 and the reinforcement plate 3 in the Z-axis direction, facilitating reducing thickness of the charging assembly 205.

In other embodiments, the charging assembly 205 may not be provided with the reinforcement plate. In other embodiments, the charging assembly 205 may not be provided with the first magnetic isolation sheet 2.

The first magnet 206 is configured to attract a magnet in a charger to implement alignment between the first coil module 1 and a charging coil TX in the charger.

In some embodiments, refer back to FIG. 3. The first magnet 206 may be accommodated in the inner hole h of the charging assembly 205. In other embodiments, the first magnet 206 may alternatively be embedded in the bottom plate of the lower watch housing 204. This is not specifically limited here.

Refer back to FIG. 3. The circuit board assembly 207 is used as an operation control processing center in the electronic device 100. FIG. 6 is a block diagram of a partial circuit of the electronic device 100 shown in FIG. 3. The circuit board assembly 207 includes a power receiving chip 2071, a charging management chip 2072, and a controller 2073. The power receiving chip 2071 is electrically connected to the first coil module 1. The power receiving chip 2071 is configured to convert an alternating current received by the first coil module 1 into a direct current, and store the direct current in a battery 208 by using the charging management chip 2072. In some embodiments, the power receiving chip 2071 may include a rectifier bridge and a low dropout regulator (low dropout regulator, LDO). The controller is configured to control operation of the power receiving chip 2071. In some embodiments, the controller may be a microprogrammed control unit (microprogrammed control unit, MCU).

The following mainly describes the first coil module 1 in the foregoing embodiment.

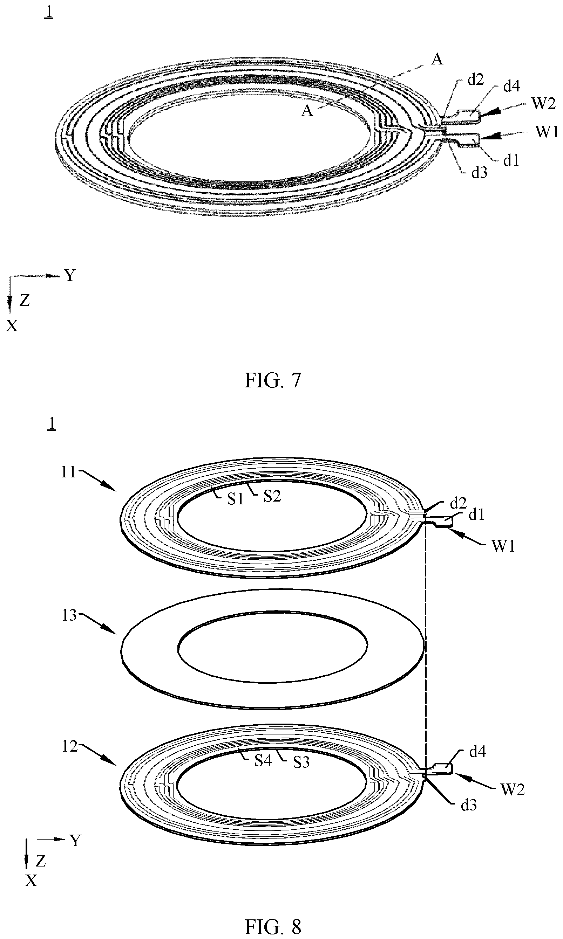

Refer to FIG. 7 and FIG. 8. FIG. 7 is a space diagram of the first coil module 1 in the charging assembly 205 shown in FIG. 5. FIG. 8 is an exploded view of the first coil module 1 shown in FIG. 7. In this embodiment, the first external terminal W1 and the second external terminal W2 are in a flattened state.

The first coil module 1 includes a first coil board 11 and a second coil board 12 which are stacked. The first coil board 11 and the second coil board 12 are connected in series between the first external terminal W1 and the second external terminal W2.

A glue layer 13 is disposed between the first coil board 11 and the second coil board 12, and the glue layer 13 is used to implement fixed connection between the first coil board 11 and the second coil board 12. A material of the glue layer includes, but is not limited to, glue, double-sided glue, 502 glue, and the like.

The following mainly describes the first coil board 11.

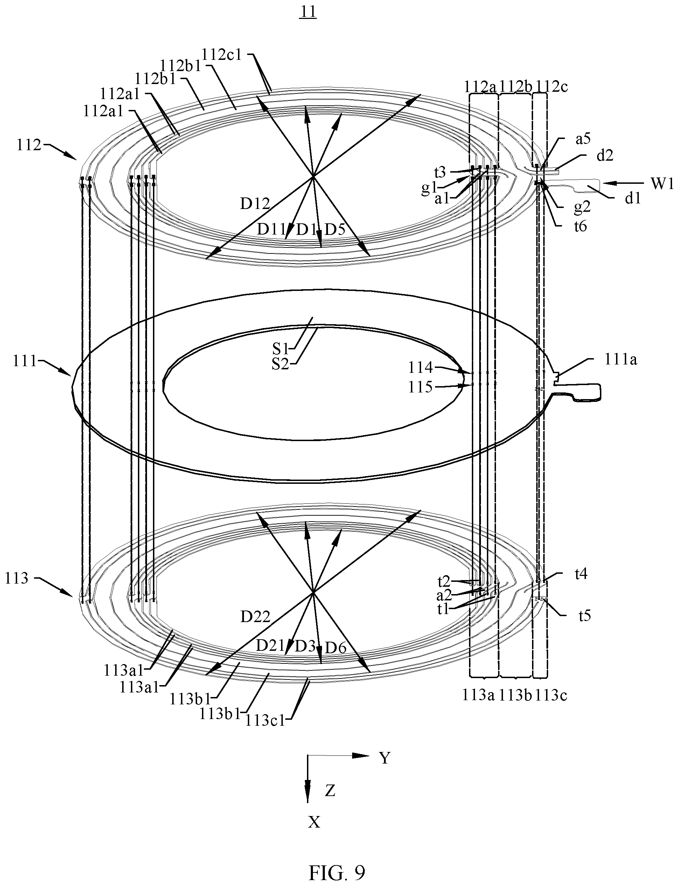

FIG. 9 is a further exploded view of the first coil board 11 in the first coil module 1 shown in FIG. 8. The first coil board 11 includes a first terminal d1, a second terminal d2, a first coil substrate 111, a first coil layer 112, and a second coil layer 113.

The first terminal d1 and the second terminal d2 are configured to lead out a circuit of the first coil board 11. In some embodiments, the first terminal d1 forms the foregoing first external terminal W1, and the second terminal d2 is electrically connected to the foregoing second coil board 12.

The first coil substrate 111 is an insulating substrate with rigidity. For example, a material of the first coil substrate 111 includes, but is not limited to, at least one of PI, PC, PC+ glass fiber, or ABS plastic.

The first coil substrate 111 is in a shape of a circular flat plate. In other embodiments, the first coil substrate 111 may alternatively be in a shape of a circular flat plate, a polygonal flat plate, an elliptical flat plate, or the like. This is not specifically limited herein.

The first coil substrate 111 includes a first surface S1 and a second surface S2 facing away from each other. When the first coil module 1 is used in the charging assembly 205 shown in FIG. 4, the first surface S1 may face away from the first magnetic isolation sheet 2, and the second surface S2 may face toward the first magnetic isolation sheet 2. Certainly, the first surface S1 may alternatively face toward the first magnetic isolation sheet 2, and the second surface S2 may face away from the first magnetic isolation sheet 2.

The first coil layer 112 is disposed on the first surface S1. Specifically, the first coil layer 112 may be a metal pattern layer formed on the first surface S1, or may be a metal conductive wire glued to the first surface S1. The following embodiments are described based on the first coil layer 112 being the metal pattern layer formed on the first surface S1. This cannot be considered as a special limitation on this application.

The first coil layer 112 includes a first coil part 112a and a second coil part 112b disposed on a periphery of the first coil part 112a.

The first coil part 112a includes at least one turn of a first coil 112a1. In the embodiment shown in FIG. 9, the first coil part 112a includes two turns of the first coil 112a1.

An innermost turn of the first coil 112a1 in the first coil part 112a forms an innermost turn of a coil in the first coil layer 112. The innermost turn of the first coil 112a1 in the first coil part 112a is a turn of the first coil 112a1 in the first coil part 112a that is closest to an area surrounded by the first coil layer 112 on the first surface S1. The innermost turn of the coil in the first coil layer 112 is a turn of a coil in the first coil layer 112 that is closest to the area surrounded by the first coil layer 112 on the first surface S1.

An inner diameter of the first coil layer 112 is D11, and an outer diameter of the first coil layer 112 is D12. Based on this, an outer diameter D1 of the first coil part 112a satisfies a condition: D11≤D1≤(D11+D12)/2.

The second coil part 112b includes at least one turn of a second coil 112b1 spirally extending along the first surface S1. In the embodiment shown in FIG. 9, the second coil part 112b includes two turns of the second coil 112b1 spirally extending along the first surface S1.

Still refer to FIG. 9. The second coil layer 113 is disposed on the second surface S2. Specifically, the second coil layer 113 may be a metal pattern layer formed on the second surface S2, or may be a metal conductive wire glued to the second surface S2. The following embodiments are described based on the second coil layer 113 being the metal pattern layer formed on the second surface S2. This cannot be considered as a special limitation on this application.

The second coil layer 113 includes a third coil part 113a and a fourth coil part 113b disposed on a periphery of the third coil part 113a.

The third coil part 113a includes at least one turn of a third coil 113a1. In the embodiment shown in FIG. 9, the third coil part 113a includes two turns of the third coil 113a1.

An innermost turn of the third coil 113a1 in the third coil part 113a forms an innermost turn of a coil in the second coil layer 113. The innermost turn of the third coil 113a1 in the third coil part 113a is a turn of the third coil 113a1 in the third coil part 113a that is closest to an area surrounded by the second coil layer 113 on the second surface S2. The innermost turn of the coil in the second coil layer 113 is a turn of a coil in the second coil layer 113 that is closest to the area surrounded by the second coil layer 113 on the second surface S2.

An inner diameter of the second coil layer 113 is D21, and an outer diameter of the second coil layer 113 is D22. Based on this, an outer diameter D3 of the third coil part 113a satisfies a condition: D21≤D3≤(D21+D22)/2.

The fourth coil part 113b also includes at least one turn of a fourth coil 113b1 spirally extending along the second surface S2. In the embodiment shown in FIG. 9, the fourth coil part 113b includes two turns of the fourth coil 113b1 spirally extending along the second surface S2.

Based on this, at least part of the third coil part 113a is connected in parallel with at least part of the first coil part 112a to form a first parallel body. Specifically, two parts forming the first parallel body may be a segment of a turn of the third coil 113a1 in the third coil part 113a and a section of a turn of the first coil 112a1 in the first coil part 112a, or may be a turn of the third coil 113a1 in the third coil part 113a and a turn of the first coil 112a1 in the first coil part 112a, or may be a plurality of turns of the third coil 113a1 in the third coil part 113a and a plurality of turns of the first coil 112a1 in the first coil part 112a, or may be the entire third coil part 113a and the entire first coil part 112a. This is not specifically limited herein.

In some embodiments, still refer to FIG. 9. At least one turn of the first coil 112a1 included in the first coil part 112a corresponds to at least one turn of the third coil 113a1 included in the third coil part 113a. "Correspond to" in this embodiment and the following embodiments all means "be opposite to". To be specific, orthographic projections of two associated objects on the first surface S1 or the second surface S2 overlap. Specifically, the at least one turn of the first coil 112a1 and the at least one turn of the third coil 113a1 may be equal in quantity and in one-to-one correspondence, or one turn of the first coil 112a1 may correspond to a plurality of turns of the third coil 113a1, or a plurality of turns of the first coil 112a1 may correspond to one turn of the third coil 113a1. This is not specifically limited herein. The following embodiments are described based on the at least one turn of the first coil 112a1 and the at least one turn of the third coil 113a1 being equal in quantity and in one-to-one correspondence.

Each turn of the first coil 112a1 is connected in parallel with a corresponding turn of the third coil 113a1 to form the first parallel body. To implement parallel connection between the first coil 112a1 and the corresponding third coil 113a1, optionally, with reference to FIG. 9, a first plated through hole 114 and a second plated through hole 115 are provided on the first coil substrate 111. The first plated through hole 114 is electrically connected between one end of the first coil 112a1 and one end of the corresponding third coil 113a1, and the second plated through hole 115 is electrically connected between the other end of the first coil 112a1 and the other end of the corresponding third coil 113a1. In this way, the plated through hole is used to implement the parallel connection, to ensure a neat appearance of the first coil board 11. Certainly, in other embodiments, two ends of the first coil 112a1 may alternatively be electrically connected to two ends of the corresponding third coil 113a1 through an electrical connection structure such as a conductive wire to implement the parallel connection. This is not specifically limited herein.

Based on this, the second coil part 112b, the fourth coil part 113b, and the first parallel body are connected in series between the first terminal d1 and the second terminal d2.

In this way, impedance of the first coil board 11 can be reduced, uneven distribution of induced currents in the first coil board 11 can be mitigated, loss of the first coil board 11 can be reduced, an optimal Q value can be obtained, and wireless charging efficiency can be improved. In addition, the second coil part 112b, the fourth coil part 113b, and the first parallel body are connected in series, and the second coil part 112b and fourth coil part 113b are not connected in parallel. In this way, a quantity of turns of coils connected in series between the first terminal d1 and the second terminal d2 can be maintained within a large quantity range, to ensure a mutual inductance value between the first coil module and a charging coil, so that the wireless charging efficiency can be ensured.

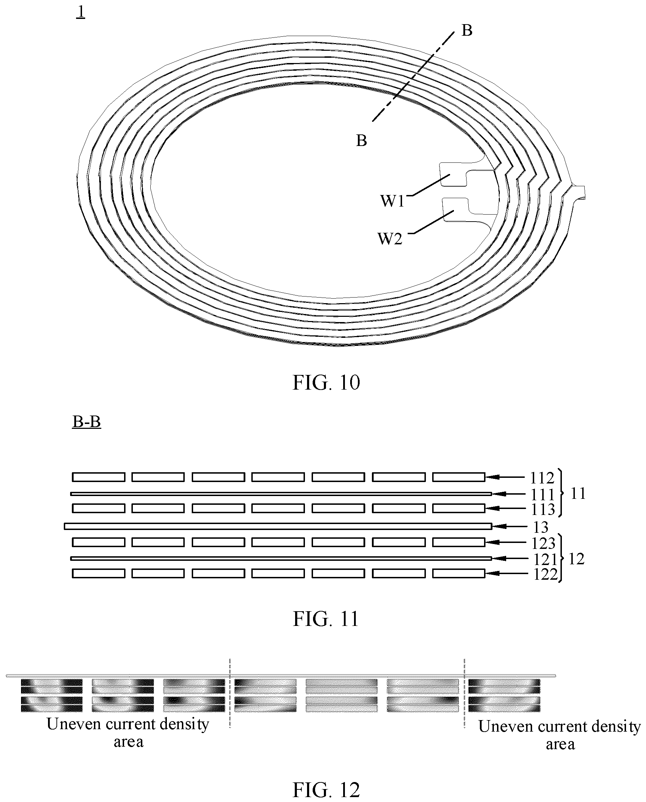

To further describe the foregoing effect, refer to FIG. 10 and FIG. 11. FIG. 10 is a schematic diagram of a structure of a first coil module 1 according to a related technology. FIG. 11 is a schematic diagram of a cross-sectional structure of the first coil module 1 shown in FIG. 10 taken along line B-B. In this embodiment, the first coil module 1 also includes a first coil board 11 and a second coil board 12 which are stacked and a glue layer 13 disposed between the first coil board 11 and the second coil board 12. The first coil board 11 includes a first coil substrate 111 and a first coil layer 112 and a second coil layer 113 respectively disposed on two opposite surfaces of the first coil substrate 111. The second coil board 12 includes a second coil substrate 121 and a third coil layer 122 and a fourth coil layer 123 respectively disposed on two opposite surfaces of the second coil substrate 121. The first coil layer 112, the second coil layer 113, the third coil layer 122, and the fourth coil layer 123 each include a plurality of turns of coils spirally extending along a plane, and the first coil layer 112, the second coil layer 113, the third coil layer 122, and the fourth coil layer 123 are connected in series between a first external terminal W1 and a second external terminal W2.

FIG. 12 is a diagram of electric field distribution of the first coil layer 112, the second coil layer 113, the third coil layer 122, and the fourth coil layer 123 in the first coil module 1 shown in FIG. 11 during charging. As shown in FIG. 12, a part of a coil less than 1/2 facing an inner edge in the first coil module 1 is affected by a charging magnetic field, so that internal currents are unevenly distributed and impedance is large.

Therefore, in comparison with the related technologies shown in FIG. 10 to FIG. 12, in embodiments of this application, the first coil part 112a and the third coil part 113a in the first coil board 11 are parts less than 1/2 facing an inner edge in the first coil module 1. Based on this, the at least part of the third coil part 113a is connected in parallel with the at least part of the first coil part 112a to form the first parallel body. The second coil part 112b, the fourth coil part 113b, and the first parallel body are connected in series between the first terminal d1 and the second terminal d2, to mitigate uneven distribution of coil currents, reduce the impedance, and facilitate improving charging efficiency of the first coil module. In addition, the second coil part 112b, the fourth coil part 113b, and the first parallel body are connected in series, and the second coil part 112b and fourth coil part 113b are not connected in parallel. In this way, a quantity of turns of coils connected in series between the first terminal d1 and the second terminal d2 can be maintained within a large quantity range, to ensure a mutual inductance value between the first coil module and a charging coil, so that the wireless charging efficiency can be ensured.

The following continues to describe embodiments of this application.

Refer back to FIG. 9. The at least one turn of the first coil 112a1 included in the first coil part 112a is connected in parallel with the at least one turn of the third coil 113a1 included in the third coil part 113a, to form at least one first parallel body. Based on this, the second coil part 112b and the fourth coil part 113b may be connected in series with all first parallel bodies in the at least one first parallel body, or may be connected in series with some first parallel bodies in the at least one first parallel body. This is not specifically limited herein.

In some embodiments, the second coil part 112b and the fourth coil part 113b are connected in series with all the first parallel bodies in the at least one first parallel body. In other words, all the first parallel bodies in the at least one first parallel body are connected in series, and the second coil part 112b and the fourth coil part 113b are connected in series with at least one first parallel body in series.

For example, in the embodiment shown in FIG. 9, two turns of the first coil 112a1 are respectively connected in parallel with two turns of the third coil 113a1 to form two first parallel bodies. Based on this, the two first parallel bodies are connected in series, and the second coil part 112b and the fourth coil part 113b are connected in series with the two first parallel bodies in series.

In this way, uneven distribution of coil currents can be effectively mitigated, and impedance can be reduced. In addition, a quantity of turns of coils connected in series between the first terminal d1 and the second terminal d2 can be maintained within the large quantity range, to improve charging efficiency.

In the foregoing embodiment, to implement series connection of at least one first parallel body, in some embodiments, with reference to FIG. 9, the at least one turn of the first coil 112a1 included in the first coil part 112a is separated from each other. In other words, the at least one turn of the first coil 112a1 is arranged at intervals and is not in contact with each other. For example, in the embodiment shown in FIG. 9, the two turns of the first coil 112a1 included in the first coil part 112a are separated from each other.

Based on this, the at least one turn of the third coil 113a1 included in the third coil part 113a is electrically connected in sequence from inside to outside. For example, in the embodiment shown in FIG. 9, the two turns of the third coil 113a1 included in the third coil part 113a are electrically connected in sequence through a second connection part a2. The second connection part a2 is disposed on the second surface S2, and the second connection part a2 and two adjacent turns of the third coil 113a1 are integrally formed. This can ensure a neat appearance.

Based on this, two ends of each turn of the first coil 112a1 are electrically connected to two ends of the corresponding turn of the third coil 113a1, respectively. For example, refer to FIG. 9. The two ends of each turn of the first coil 112a1 are electrically connected to the two ends of the corresponding turn of the third coil 113a1 respectively through plated through holes (including the first plated through hole 114 and the second plated through hole 115). There may be one or more first plated through holes 114 and second plated through holes 115. In the embodiment shown in FIG. 9, quantities of the first plated through hole 114 and the second plated through hole 115 each are two.

In this way, at least one first parallel body formed by the at least one turn of the first coil 112a1 and the at least one turn of the third coil 113a1 implements series connection of two adjacent first parallel bodies through a second connection part a2 between two adjacent turns of the third coil 113a1. This structure is simple and has a neat appearance.

Based on any one of the foregoing embodiments, to further improve uniformity of current distribution, with reference to FIG. 9, the first coil part 112a includes a first turn of the first coil 112a1, and the third coil part 113a includes a second turn of the third coil 113a1. The first turn of the first coil 112a1 may be any turn of the first coil 112a1 in the first coil part 112a, and the second turn of the third coil 113a1 may be any turn of the third coil 113a1 in the third coil part 113a. The second turn of the third coil 113a1 corresponds to the first turn of the first coil 112a1.

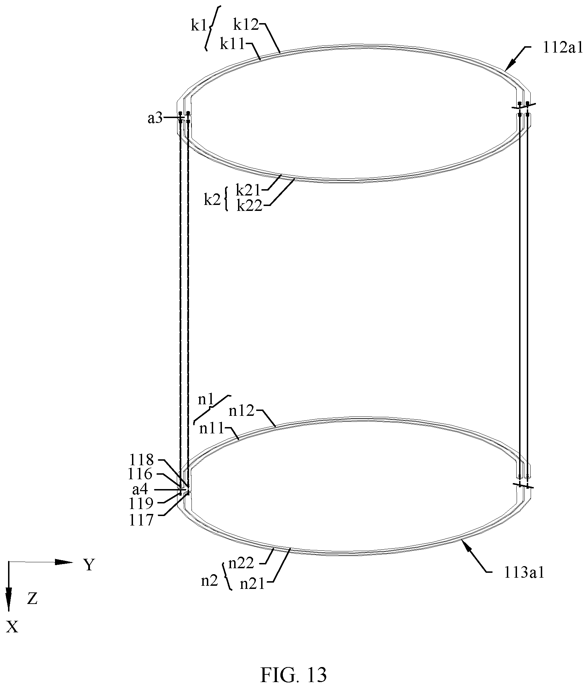

FIG. 13 is a schematic diagram of an electrical connection path between the first turn of the first coil 112a1 and the second turn of the third coil 113a1 in the first coil module 1 shown in FIG. 9. This embodiment is described by using an example in which the first turn of the first coil 112a1 is the innermost turn of the first coil 112a1 in the first coil part 112a, and the second turn of the third coil 113a1 is the innermost turn of the third coil 113a1 in the third coil part 113a.

The first turn of the first coil 112a1 includes a first coil segment k1 and a second coil segment k2, and the first coil segment k1 and the second coil segment k2 are arranged in a peripheral direction of the first turn of the first coil 112a1. The first coil segment k1 and the second coil segment k2 may be two semicircular arc segments, or the first coil segment k1 may be a major arc segment and the second coil segment k2 may be a minor arc segment, or the first coil segment k1 may be a minor arc segment and the second coil segment k2 may be a major arc segment, or both the first coil segment k1 and the second coil segment k2 may be minor arc segments.

The first coil segment k1 includes a first inner coil part k11 and a first outer coil part k12. The first outer coil part k12 is located outside the first inner coil part k11. The outside of the first inner coil part k11 is a side of the first inner coil part k11 away from an area surrounded by the first coil part 112a on the first surface S1. The first outer coil part k12 and the first inner coil part k11 may be connected or spaced apart. This embodiment and the following embodiments are described based on the first outer coil part k12 and the first inner coil part k11 being spaced apart. In this way, the first outer coil part k12 and the first inner coil part k11 are independent of each other, and internal currents are separated from each other.

In addition, the second coil segment K2 includes a second inner coil part k21 and a second outer coil part k22. The second outer coil part k22 is located outside the second inner coil part k21. The outside of the second inner coil part k21 is a side of the second inner coil part k21 away from the area surrounded by the first coil part 112a on the first surface S1. The second outer coil part k22 and the second inner coil part k21 may be connected or spaced apart. This embodiment and the following embodiments are described based on the second outer coil part k22 and the second inner coil part k21 being spaced apart. In this way, the second outer coil part k22 and the second inner coil part k21 are independent of each other, and internal currents are separated from each other.

Still refer to FIG. 13. The second turn of the third coil 113a1 includes a third coil segment n1 and a fourth coil segment n2, and the third coil segment n1 and the fourth coil segment n2 are arranged in a peripheral direction of the second turn of the third coil 113a1. The third coil segment n1 and the fourth coil segment n2 may be two semicircular arc segments, or the third coil segment n1 may be a major arc segment and the fourth coil segment n2 may be a minor arc segment, or the third coil segment n1 may be a minor arc segment and the fourth coil segment n2 may be a major arc segment, or both the third coil segment n1 and the fourth coil segment n2 may be minor arc segments. The third coil segment n1 corresponds to the first coil segment k1, and the fourth coil segment n2 corresponds to the second coil segment k2.

The third coil segment n1 includes a third inner coil part n11 and a third outer coil part n12. The third outer coil part n12 is located outside the third inner coil part n11. The outside of the third inner coil part n11 is a side of the third inner coil part n11 away from an area surrounded by the third coil part 113a on the second surface S2. The third outer coil part n12 and the third inner coil part n11 may be connected or spaced apart. This embodiment and the following embodiments are described based on the third outer coil part n12 and the third inner coil part n11 being spaced apart. In this way, the third outer coil part n12 and the third inner coil part n11 are independent of each other, and internal currents are separated from each other.

In addition, the fourth coil segment n2 includes a fourth inner coil part n21 and a fourth outer coil part n22. The fourth outer coil part n22 is located outside the fourth inner coil part n21. The outside of the fourth inner coil part n21 is a side of the fourth inner coil part n21 away from the area surrounded by the third coil part 113a on the second surface S2. The fourth outer coil part n22 and the fourth inner coil part n21 may be connected or spaced apart. This embodiment and the following embodiments are described based on the fourth outer coil part n22 and the fourth inner coil part n21 being spaced apart. In this way, the fourth outer coil part n22 and the fourth inner coil part n21 are independent of each other, and internal currents are separated from each other.

Based on this, still refer FIG. 13. An end of the first outer coil part k12 facing the second outer coil part k22 is electrically connected to an end of the second inner coil part k12 facing the first inner coil part k11. In some embodiments, the two ends are electrically connected through a third connection part a3. The third connection part a3 is disposed on the first surface S1, and the third connection part a3, the first outer coil part k12, and the second inner coil part k12 are integrally formed. This can ensure a neat appearance.

An end of the third outer coil part n12 facing the fourth outer coil part n22 is electrically connected to an end of the first outer coil part k12 facing the second outer coil part k22. In some embodiments, the two ends are electrically connected through a third plated through hole 116. This can ensure a neat appearance. There may be one or more third plated through holes 116. In the embodiment shown in FIG. 13, a quantity of third plated through holes 116 is two, facilitating reducing impedance.

An end of the fourth inner coil part n21 facing the third inner coil part n11 is electrically connected to an end of the second inner coil part k21 facing the first inner coil part k11. In some embodiments, the two ends are electrically connected through a fourth plated through hole 117. This can ensure a neat appearance. There may be one or more fourth plated through holes 117. In the embodiment shown in FIG. 13, a quantity of fourth plated through holes 117 is two, facilitating reducing impedance.

An end of the third inner coil part n11 facing the fourth inner coil part n21 is electrically connected to an end of the fourth outer coil part n22 facing the third outer coil part n12. In some embodiments, the two ends are electrically connected through a fourth connection part a4. The fourth connection part a4 is disposed on the second surface S2, and the fourth connection part a4, the third inner coil part n11, and the fourth outer coil part n22 are integrally formed. This can ensure a neat appearance.

An end of the first inner coil part k11 facing the second inner coil part k21 is electrically connected to the end of the third inner coil part n11 facing the fourth inner coil part n21. In some embodiments, the two ends are electrically connected through a fifth plated through hole 118. This can ensure a neat appearance. There may be one or more fifth plated through holes 118. In the embodiment shown in FIG. 13, a quantity of fifth plated through holes 118 is two, facilitating reducing impedance.

An end of the second outer coil part K22 facing the first outer coil part K12 is electrically connected to the end of the fourth outer coil part n22 facing the third outer coil part n12. In some embodiments, the two ends are electrically connected through a sixth plated through hole 119. This can ensure a neat appearance. There may be one or more sixth plated through holes 119. In the embodiment shown in FIG. 13, a quantity of sixth plated through holes 119 is two, facilitating reducing impedance.

In this way, a turn of the first coil 112a1 in the first coil part 112a is formed by splicing a plurality of parts, and a turn of the third coil 113a1 in the third coil part 113a is also formed by splicing a plurality of parts. In addition, a turn of the first coil 112a1 and a corresponding turn of the third coil 113a1 form an inner-outer cross structure, to further mitigate uneven distribution of currents between an inner layer and an outer layer, so as to further reduce the impedance.

Based on the foregoing embodiments, to connect the second coil part 112b, the fourth coil part 113b, and the at least one first parallel body in series between the first terminal d1 and the second terminal d2, in some embodiments, with reference back to FIG. 9, two ends of the third coil part 113a are respectively a first end t1 and a second end t2.

The first end t1 is located on an outermost turn of the third coil 113a1 in the third coil part 113a, the first end t1 is electrically connected to an end of the fourth coil part 113b facing the third coil part 113a, and an end of the fourth coil part 113b away from the third coil part 113a is electrically connected to the first terminal d1. Specifically, the end of the fourth coil part 113b away from the third coil part 113a may be electrically connected to the first terminal d1, or may be indirectly and electrically connected to the first terminal d1 through another structure.

The second end t2 is located on the innermost turn of the third coil 113a1 in the third coil part 113a, the second end t2 is electrically connected to an end of the second coil part 112b facing the first coil part 112a, and an end of the second coil part 112b away from the first coil part 112a is electrically connected to the second terminal d2.

In this way, the second coil part 112b, the fourth coil part 113b, and the at least one first parallel body are connected in series between the first terminal d1 and the second terminal d2. This structure is simple and easy to implement.

In the foregoing embodiment, to implement electrical connection between the second end t2 and the end of the second coil part 112b facing the first coil part 112a, in some embodiments, still with reference to FIG. 9, the innermost turn of the first coil 112a1 in the first coil part 112a corresponds to the innermost turn of the third coil 113a1, and an end of the innermost turn of the first coil 112a1 electrically connected to the second end t2 is a third end t3. In a peripheral direction of the first coil part 112a, a first spacing g1 is formed between both ends of each turn of the first coil 112a1. Based on this, the first coil board 11 further includes a first connection part a1. The first connection part a1 is disposed on the first surface S1 and penetrates the first spacing g1. One end of the first connection part a1 is electrically connected to the third end t3, and the other end of the first connection part a1 is electrically connected to the end of the second coil part 112b facing the first coil part 112a. In this way, a plated through hole between the third end t3 and the second end t2 as well as the first connection part a1 are used to implement electrical connection between the second end t2 and the end of the second coil part 112b facing the first coil part 112a, so that intersection of metal layers on the first surface S1 can be avoided, to ensure the neat appearance.

In some embodiments, the first connection part a1, the first coil part 112a, and the second coil part 112b are integrally formed. This can reduce difficulty in manufacturing and ensure a neat appearance.

Refer to FIG. 12. In the first coil module 1, current distribution of a coil less than 1/2 facing the inner edge is uneven, and current distribution of the coil less than 1/3 facing an outer edge is also uneven. Based on this, to further reduce the impedance of the first coil board 11, in some embodiments, still with reference to FIG. 9, the first coil layer 112 further includes a fifth coil part 112c disposed on a periphery of the second coil part 112b.

The fifth coil part 112c includes at least one turn of a fifth coil 112c 1. In the embodiment shown in FIG. 9, the fifth coil part 112c includes one turn of the fifth coil 112c1.

An outermost turn of the fifth coil 112c1 in the fifth coil part 112c forms an outermost turn of a coil in the first coil layer 112. The outermost turn of the fifth coil 112c1 in the fifth coil part 112c is a turn of the fifth coil 112c 1 in the fifth coil part 112c that is closest to the area surrounded by the first coil layer 112 on the first surface S1. The outermost turn of the coil in the first coil layer 112 is a turn of a coil in the first coil layer 112 that is farthest from the area surrounded by the first coil layer 112 on the first surface S1.

An inner diameter D5 of the fifth coil part satisfies a condition: $(D11+D12)/3 \leq D5 \leq D12$.

The second coil 113 further includes a sixth coil part 113c disposed on a periphery of the fourth coil part 113b.

The sixth coil part 113c includes at least one turn of a sixth coil 113c1. In the embodiment shown in FIG. 9, the sixth coil part 113c includes one turn of the sixth coil 113c1.

An outermost turn of the sixth coil 113c1 in the sixth coil part 113c forms an outermost turn of a coil in the second coil layer 113. The outermost turn of the sixth coil 113c1 in the sixth coil part 113c is a turn of the sixth coil 113c1 in the sixth coil part 113c that is closest to the area surrounded by the second coil layer 113 on the second surface S2. The outermost turn of the coil in the second coil layer 113 is a turn of a coil in the second coil layer 113 that is farthest from the area surrounded by the second coil layer 113 on the second surface S2.

An inner diameter D6 of the sixth coil part satisfies a condition: $(D21+D22)/3 \leq D6 \leq D22$.

Based on this, at least part of the sixth coil part 113c is connected in parallel with at least part of the fifth coil part 112c to form a second parallel body. Specifically, two parts forming the second parallel body may be a segment of a turn of the sixth coil 113c1 in the sixth coil part 113c and a section of a turn of the fifth coil 112c1 in the fifth coil part 112c, or may be a turn of the sixth coil 113c1 in the sixth coil part 113c and a turn of the fifth coil 112c1 in the fifth coil part 112c, or may be a plurality of turns of the sixth coil 113c1 in the sixth coil part 113c and a plurality of turns of the fifth coil 112c1 in the fifth coil part 112c, or may be the entire sixth coil part 113c and the entire fifth coil part 112c. This is not specifically limited herein.

In some embodiments, focus on FIG. 9. At least one turn of the fifth coil 112c1 included in the fifth coil part 112c corresponds to at least one turn of the sixth coil 113c1 included in the sixth coil part 113c. Specifically, the at least one turn of the fifth coil 112c1 and the at least one turn of the sixth coil 113c1 may be equal in quantity and in one-to-one correspondence, or one turn of the fifth coil 112c1 may correspond to a plurality of turns of the sixth coil 113c1, or a plurality of turns of the fifth coil 112c1 may correspond to one turn of the sixth coil 113c1. This is not specifically limited herein. The following embodiments are described based on the at least one turn of the fifth coil 112c1 and the at least one turn of the sixth coil 113c1 being equal in quantity and in one-to-one correspondence.

Each turn of the fifth coil 112c1 is connected in parallel with a corresponding turn of the sixth coil 113c1 to form the second parallel body. In some embodiments, two ends of each turn of the fifth coil 112c1 and two ends of the corresponding turn of the sixth coil 113c1 may be electrically connected through plated through holes to implement parallel connection between each turn of the fifth coil 112c1 and the corresponding turn of the sixth coil 113c1.

Based on this, the second coil part 112b, the fourth coil part 113b, the first parallel body, and the second parallel body are connected in series between the first terminal d1 and the second terminal d2.

In this way, the impedance of the first coil board 11 can be further reduced, the uneven distribution of the induced currents in the first coil board 11 can be mitigated, and the wireless charging efficiency can be improved.

Still refer to FIG. 9. The at least one turn of the fifth coil 112c1 included in the fifth coil part 112c is connected in parallel with the at least one turn of the sixth coil 113c1 included in the sixth coil part 113c, to form at least one second parallel body. Based on this, the second coil part 112b, the fourth coil part 113b, and the first parallel body may be connected in series with all second parallel bodies in the at least one second parallel body, or may be connected in series with some second parallel bodies in the at least one second parallel body. This is not specifically limited herein.

In some embodiments, the second coil part 112b, the fourth coil part 113b, and the first parallel body are connected in series with all the second parallel bodies in the at least one second parallel body. In other words, all the second parallel bodies in the at least one second parallel body are connected in series, and the second coil part 112b, the fourth coil part 113b, and the first parallel body are connected in series with at least one second parallel body in series.

In this way, the uneven distribution of the coil currents can be effectively mitigated, and the impedance can be reduced.

In the foregoing embodiment, to implement series connection of at least one second parallel body, in some embodiments, still with reference to FIG. 9, the at least one turn of the fifth coil 112c1 included in the fifth coil part 112c is separated from each other. In other words, the at least one turn of the fifth coil 112c1 is arranged at intervals and is not in contact with each other.

Based on this, the at least one turn of the sixth coil 113c1 included in the sixth coil part 113c is electrically connected in sequence from inside to outside.

Based on this, the two ends of each turn of the fifth coil 112c1 are electrically connected to the two ends of the corresponding turn of the sixth coil 113c1, respectively.

In this way, at least one second parallel body formed by the at least one turn of the fifth coil 112c1 and the at least one turn of the sixth coil 113c1 implements series connection through a connection part between two adjacent turns of the sixth coil 113c1. This structure is simple and has a neat appearance.

In some embodiments, still refer to FIG. 9. Each turn of the fifth coil 112c1 and the corresponding turn of the sixth coil 113c1 may alternatively be arranged to form an inner-outer cross structure as shown in FIG. 13, to mitigate uneven distribution of currents between an inner layer and an outer layer, and further reduce the impedance.

To connect the second coil part 112b, the fourth coil part 113b, the first parallel body, and the second parallel body in series between the first terminal d1 and the second terminal d2, in some embodiments, still with reference to FIG. 9, two ends of the sixth coil part 113c1 are respectively a fourth end t4 and a fifth end t5.

The fourth end t4 is located on an innermost turn of the sixth coil 113c1 in the sixth coil part 113c, and the fourth end t4 is electrically connected to the end of the fourth coil part 113b away from the third coil part 113a.

The fifth end t5 is located on the outermost turn of the sixth coil 113c1 in the sixth coil part 113c, and the fifth end t5 is electrically connected to the first terminal d1.

In this way, the at least one second parallel body formed by the at least one turn of the fifth coil 112c1 and the at least one turn of the sixth coil 113c1 is connected in series between the fourth coil part 113b and the first terminal d1. This structure is simple and easy to be implemented.

In the foregoing embodiment, to implement electrical connection between the fifth end t5 and the first terminal d1, in some embodiments, still with reference to FIG. 9, the outermost turn of the fifth coil 112c1 in the fifth coil part 112c corresponds to the outermost turn of the sixth coil 113c1, and an end of the outermost turn of the fifth coil 112c1 electrically connected to the fifth end t5 is a sixth end t6. The sixth end t6 is electrically connected to the first terminal d1. In this way, a plated through hole between the fifth end t5 and the sixth end t6 is used to implement electrical connection between the fifth end t5 and the first terminal d1. This structure is simple and easy to be implemented.

To implement electrical connection between the end of the second coil part 112b away from the first coil part 112a and the second terminal d2, in some embodiments, still with reference to FIG. 9, in a peripheral direction of the fifth coil part 112c, a second spacing g2 is formed between both ends of each turn of the fifth coil 112c1. Based on this, the first coil board 11 further includes a fifth connection part a5. The fifth connection part a5 is disposed on the first surface S1 and penetrates the second spacing g2. One end of the fifth connection part a5 is electrically connected to the end of the second coil part 112b away from the first coil part 112a, and the other end of the fifth connection part a5 is electrically connected to the second terminal d2. In this way, the fifth connection part a5 is used to implement electrical connection between the end of the second coil part 112b away from the first coil part 112a and the second terminal d2, so that intersection of metal layers on the first surface S1 can be avoided, to ensure the neat appearance.

In some embodiments, the fifth connection part a5, the second coil part 112b, and the second terminal d2 are integrally formed. This can reduce difficulty in manufacturing.

In some embodiments, still refer to FIG. 9. The first terminal d1 and the second terminal d2 are both located on the first surface S1, and the first terminal d1 and the second terminal d2 are located outside the first coil layer 112. The outside of the first coil layer 112 is a side of the first coil layer 112 away from an area surrounded by the first coil layer 112 on the first surface S1. This structure is simple and has a neat appearance. In other embodiments, the first terminal d1 and the second terminal d2 may alternatively be disposed on the second surface S2, or one of the first terminal d1 and the second terminal d2 is disposed on the first surface S1 and the other one of the first terminal d1 and the second terminal d2 is disposed on the second surface S2. This is not specifically limited herein.

A structure of the first coil board 11 is described above. In the first coil board 11, a sequence of series connection of the second coil part 112b, the fourth coil part 113b, the first parallel body, and the second parallel body between the first terminal d1 and the second terminal d2 is: the first terminal d1→the at least one second parallel body→the fourth coil part 113b→the at least one first parallel body→the second coil part 112b→the second terminal d2. Certainly, there may be another sequence of the series connection of the second coil part 112b, the fourth coil part 113b, the first parallel body, and the second parallel body between the first terminal d1 and the second terminal d2.

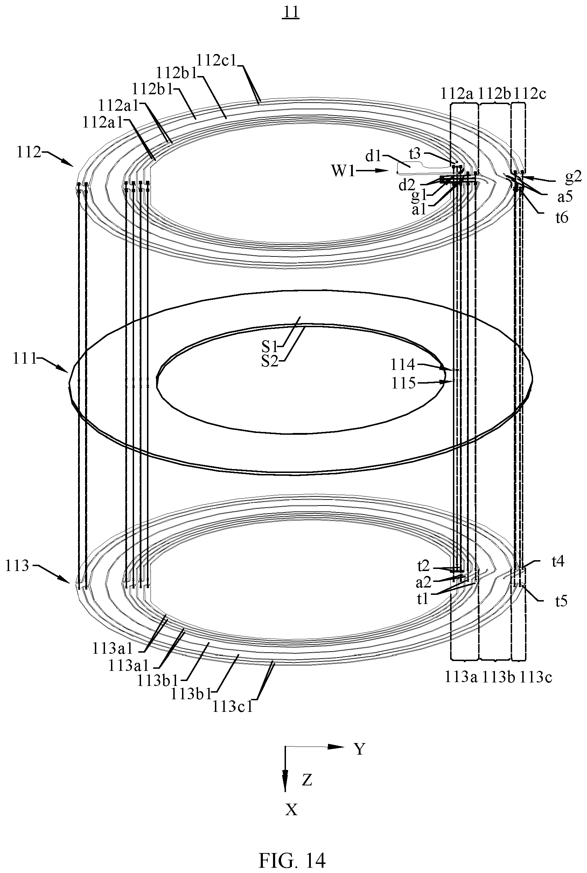

For example, FIG. 14 is an exploded view of a first coil module 1 according to some other embodiments of this application. In this embodiment, at least one turn of a first coil 112a1 included in a first coil part 112a is connected in parallel with at least one turn of a third coil 113a1 included in a third coil part 113a, to form at least one first parallel body. The at least one turn of the first coil 112a1 included in the first coil part 112a is arranged separately from each other. The at least one turn of the third coil 113a1 included in the third coil part 113a is electrically connected in sequence from inside to outside. Two ends of each turn of the first coil 112a1 are electrically connected to two ends of a corresponding turn of the third coil 113a1, respectively. In this way, the at least one first parallel body is connected in series.

Similarly, at least one turn of a fifth coil 112c1 included in a fifth coil part 112c is connected in parallel with at least one turn of a sixth coil 113c1 included in a sixth coil part 113c, to form at least one second parallel body. The at least one turn of the fifth coil 112c1 included in the fifth coil part 112c is arranged separately from each other. The at least one turn of the sixth coil 113c1 included in the sixth coil part 113c is electrically connected in sequence from inside to outside. Two ends of each turn of the fifth coil 112c1 are electrically connected to two ends of a corresponding turn of the sixth coil 113c1, respectively. In this way, the at least one second parallel body is connected in series.

Based on this, two ends of the third coil part 113a are respectively a first end t1 and a second end t2. The first end t1 is located on an outermost turn of the third coil 113a1 in the third coil part 113a, the first end t1 is electrically connected to an end of a fourth coil part 113b facing the third coil part 113a, an end of the fourth coil part 113b away from the third coil part 113a is electrically connected to an end of a sixth coil part 113c facing the fourth coil part 113b (that is, a fourth end t4), an end of the sixth coil part 113c away from the fourth coil part 113b (that is, a fifth end t5) is electrically connected to an end of a second coil part 112b away from the first coil part 112a, and an end of the second coil part 112b facing the first coil part 112a is electrically connected to a second terminal d2. The second end t2 is located on an innermost turn of the third coil 113a1 in the third coil part 113a, and the second end t2 is electrically connected to a first terminal d1.

In this way, a sequence of series connection of the second coil part 112b, the fourth coil part 113b, the first parallel body, and the second parallel body between the first terminal d1 and the second terminal d2 is: the first terminal d1→the at least one first parallel body→the fourth coil part 113b→the at least one second parallel body→the second coil part 112b→the second terminal d2.

In the foregoing embodiment, to implement electrical connection between the end of the sixth coil part 113c away from the fourth coil part 113b and the end of the second coil part 112b away from the first coil part 112a, in some embodiments, still with reference to FIG. 14, an outermost turn of the fifth coil 112c 1 in the fifth coil part 112c corresponds to an outermost turn of the sixth coil 113c1, and an end of the outermost turn of the fifth coil 112c1 electrically connected to the fifth end t5 is a sixth end t6. In a peripheral direction of the fifth coil part 112c, a second spacing g2 is formed between both ends of each turn of the fifth coil 112c1. Based on this, the first coil board 11 further includes a fifth connection part a5. The fifth connection part a5 is disposed on a first surface S1 and penetrates the second spacing g2. One end of the fifth connection part a5 is electrically connected to the sixth end t6, and the other end of the fifth connection part a5 is electrically connected to the end of the second coil part 112b away from the first coil part 112a. In this way, a plated through hole between the fifth end t5 and the sixth end t6 as well as the fifth connection part a5 are used to implement the electrical connection between the end of the sixth coil part 113c away from the fourth coil part 113b and the end of the second coil part 112b away from the first coil part 112a, so that intersection of metal layers on the first surface S1 can be avoided, to ensure a neat appearance.

In addition, to implement electrical connection between the end of the second coil part 112b facing the first coil part 112a and the second terminal d2, in some embodiments, in a peripheral direction of the first coil part 112a, a first spacing g1 is formed between both ends of each turn of the first coil 112a1. Based on this, the first coil board 11 further includes a first connection part a1. The first connection part a1 is disposed on the first surface S1 and penetrates the first spacing g1. One end of the first connection part a1 is electrically connected to the end of the second coil part 112b facing the first coil part 112a, and the other end of the first connection part a1 is electrically connected to the second terminal d2. In this way, the first connection part a1 is used to implement the electrical connection between the end of the second coil part 112b facing the first coil part 112a and the second terminal d2, so that intersection of metal layers on the first surface S1 can be avoided, to ensure the neat appearance.

Furthermore, to implement electrical connection between the second end t2 and the first terminal d1, in some embodiments, the second end t2 is located on the innermost turn of the third coil 113a1 in the third coil part 113a, an innermost turn of the first coil 112a1 in the first coil part 112a corresponds to the innermost turn of the third coil 113a1, and an end of the innermost turn of the first coil 112a1 electrically connected to the second end t2 is a third end t3. The third end t3 is electrically connected to the first terminal d1. In this way, a plated through hole between the third end t3 and the second end t2 is used to implement the electrical connection between the second end t2 and the first terminal d1. In this way, the first terminal d1 can be disposed on the first surface S1 to facilitate processing.

In some embodiments, still refer to FIG. 14. The first terminal d1 and the second terminal d2 are both located on the first surface S1, and the first terminal d1 and the second terminal d2 are located inside a first coil layer 112. The inside of the first coil layer 112 is a side of the first coil layer 112 facing an area surrounded by the first coil layer 112 on the first surface S1. This structure is simple and has a neat appearance.

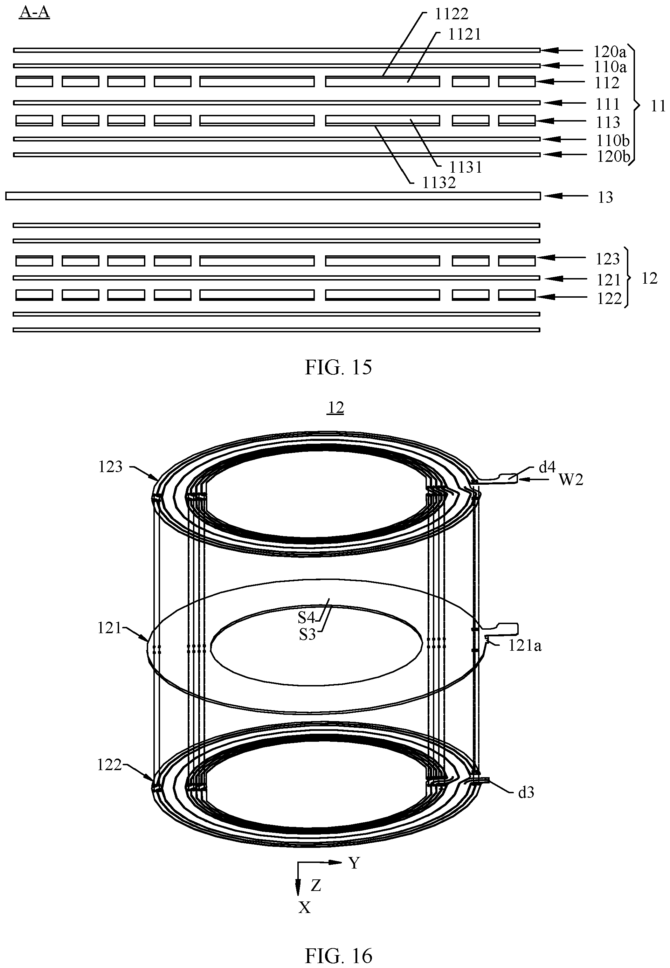

In some embodiments, FIG. 15 is a schematic diagram of a cross-sectional structure of the first coil module 1 shown in FIG. 7 taken along line A-A. In this embodiment, the first coil layer 112 and the second coil layer 113 may include two layers of metal material. Specifically, refer to FIG. 15. The first coil layer 112 includes a first metal material layer 1121 and a second metal material layer 1122. The first metal material layer 1121 is disposed on the first surface S1. The second metal material layer 1122 is a plating layer formed on a surface of the first metal material layer 1121 away from the first surface S1 when a plated through hole (plated through hole, PTH) is formed.

The second coil layer 113 includes a third metal material layer 1131 and a fourth metal material layer 1132. The third metal material layer 1131 is disposed on the second surface S2. The fourth metal material layer 1132 is a plating layer formed on a surface of the third metal material layer 1131 away from the second surface S2 when a PTH is formed.

In other embodiments, the first coil layer 112 and the second coil layer 113 may each alternatively include one layer of metal, or three or more layers of metal. This is not specifically limited herein.

In some embodiments, still refer to FIG. 15. A first protective layer 120a is further disposed on a side of the first coil layer 112 facing away from a first coil substrate 111. The first protective layer 120a is an insulating layer. A material of the first protective layer 120a includes, but is not limited to, at least one of PI, PC, PC+ glass fiber, and ABS plastic. The first protective layer 120a is configured to protect the first coil layer 112. A color of the first protective layer 120a includes, but is not limited to, black, white, yellow, and the like.

In some embodiments, a first glue layer 110a is further disposed between the first protective layer 120a and the first coil layer 112. The first glue layer 110a is configured to glue the first protective layer 120a to the first coil layer 112.

Similarly, still refer to FIG. 15. A second protective layer 120b is further disposed on a side of the second coil layer 113 facing away from the first coil substrate 111. The second protective layer 120b is an insulating layer. A material of the second protective layer 120b includes, but is not limited to, at least one of PI, PC, PC+ glass fiber, and ABS plastic. The second protective layer 120b is configured to protect the second coil layer 113. A color of the second protective layer 120b includes, but is not limited to, black, white, yellow, and the like.

In some embodiments, a second glue layer 110b is further disposed between the second protective layer 120b and the second coil layer 113. The second glue layer 110b is configured to glue the second protective layer 120b to the second coil layer 113.

Refer to Table 1 below. Table 1 records optional materials and optional thickness of layer structures in the first coil board 11.

**Table 1**

| Layer structure name | Material | Thickness (unit: micrometer) |
| --- | --- | --- |
| First protective layer | PI | 7.5 |
| First glue layer | AD glue | 5 |
| Second metal material layer | Copper | 12 |
| First metal material layer | Copper | 50 |
| First coil substrate | PI | 12.5 |
| Third metal material layer | Copper | 50 |
| Fourth metal material layer | Copper alloy | 12 |
| Second glue layer | AD glue | 5 |
| Second protective layer | PI | 7.5 |

It should be noted that the optional materials and the optional thickness of the layer structures in the first coil board 11 are described as an example in Table 1. This cannot be regarded as a special limitation on the optional materials and the optional thickness of the layer structures in the first coil board 11.

The structure of the first coil board 11 is described above, and a structure of the second coil board 12 can be the same as the structure of the first coil board 11.

Specifically, refer back to FIG. 8. The second coil board 12 is located on a side of the second surface S2 of the first coil board 11 facing away from the first surface S1. FIG. 16 is a further exploded view of the second coil board 12 in the first coil module 1 shown in FIG. 8. The second coil board 12 includes a second coil substrate 121, a third coil layer 122, and a fourth coil layer 123.

The second coil substrate 121 is an insulating substrate with rigidity. The second coil substrate 121 includes a third surface S3 and a fourth surface S4 opposite to each other. Refer back to FIG. 8. The third surface S3 is disposed facing away from the first coil board 11, and the fourth surface S4 is disposed toward the first coil board 11.

The third coil layer 122 is disposed on the third surface S3. A structure of the third coil layer 122 is the same as a structure of the first coil layer 112. This is not described in detail herein. The fourth coil layer 123 is disposed on the fourth surface S4. A structure of the fourth coil layer 123 is the same as a structure of the second coil layer 113. This is not described in detail herein. A connection manner of the third coil layer 122 and the fourth coil layer 123 is the same as a connection manner of the first coil layer 112 and the second coil layer 113. This is not described in detail herein.

The second coil board 12 further includes a third terminal d3 and a fourth terminal d4. The third terminal d3 is electrically connected to the second terminal d2, and the fourth terminal d4 forms a second external terminal W2. In this way, the first coil board 11 and the second coil board 12 are connected in series between the first external terminal W1 and the second external terminal W2.

In the foregoing embodiment, the third terminal d3 and the second terminal d2 may be electrically connected through a solder joint or may be integrally formed. In some embodiments, the third terminal d3 and the second terminal d2 are integrally formed.

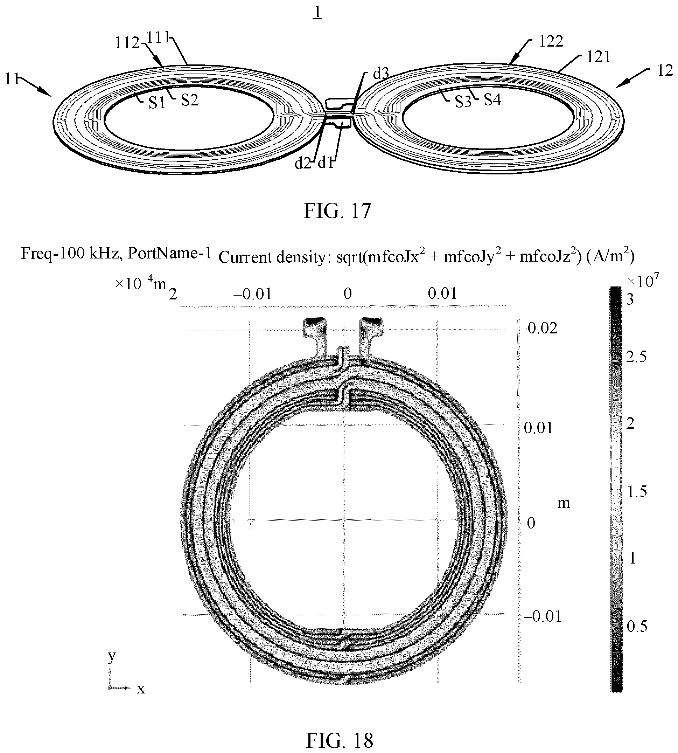

Specifically, refer to FIG. 16. The second coil substrate 121 includes a second connection part 121a. The third terminal d3 is disposed in an area of the third surface S3 and on the second connection part 121a. Refer back to FIG. 9. The first coil substrate 111 includes a first connection part 111a. The second terminal d2 is disposed in an area of the first surface S1 and on the first connection part 111a. The second connection part 121a and the first connection part 111a are connected and integrally formed. The third coil layer 122, the third terminal d3, the second terminal d2, and the first coil layer 112 are integrally formed. In this way, the first coil module 1 shown in FIG. 8 can be formed by folding the first coil module in an expanded state in half and gluing the first coil module through the glue layer 13. FIG. 17 is a schematic diagram of a structure of the first coil module 1 in the expanded state according to some embodiments of this application. This can reduce difficulty in processing the first coil module 1 and reduce production costs.

In other embodiments, the structure of the second coil board 12 can alternatively be different from the structure of the first coil board 11. The first coil module 1 may alternatively not include the second coil board 12. Alternatively, the first coil module 1 includes, in addition to the first coil board 11 and the second coil board 12, a third coil board, a fourth coil board, a fifth coil board, and the like stacked with the first coil board 11 and the second coil board 12. Structures of the third coil board, the fourth coil board, and the fifth coil board may be the same as the structure of the first coil board 11, or may be different from the structure of the first coil board 11. This is not specifically limited herein.

To verify performance of the first coil module 1 provided in embodiments of this application, refer to FIG. 18. FIG. 18 is a current simulation diagram of the first coil module 1 shown in FIG. 7. It may be learned from FIG. 8, uniformity of current distribution is good, and simulated alternating current resistance RAC is 329 mΩ. The inner diameter, outer diameter, quantity of coil layers, and quantity of turns of each coil layer of the first coil module 1 in FIG. 7 are the same as those shown in FIG. 18, and an alternating current resistance RAC obtained by simulation of the first coil module in which each coil turn is connected in series with other coils is 400 mΩ. A loss of the first coil module 1 described in the technical solution of this application is reduced by 17.5%.

This application further provides a charger 100A. The charger 100A is configured to charge the electronic device 100.

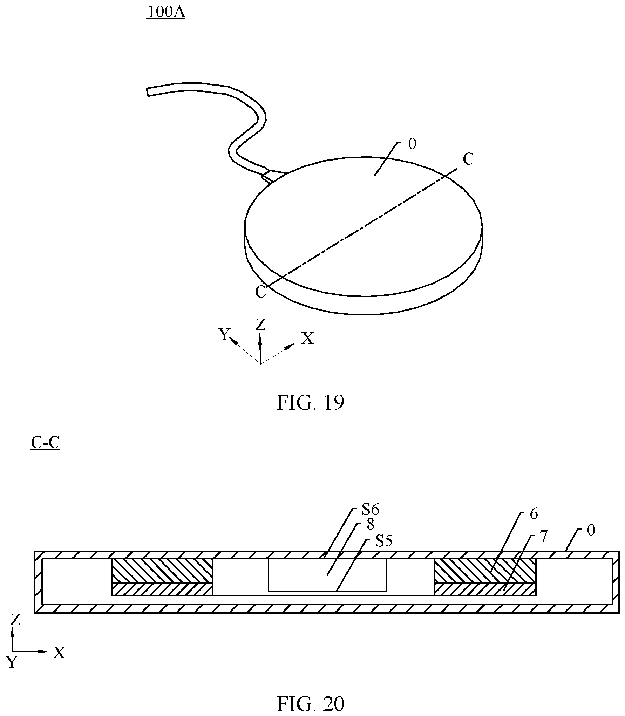

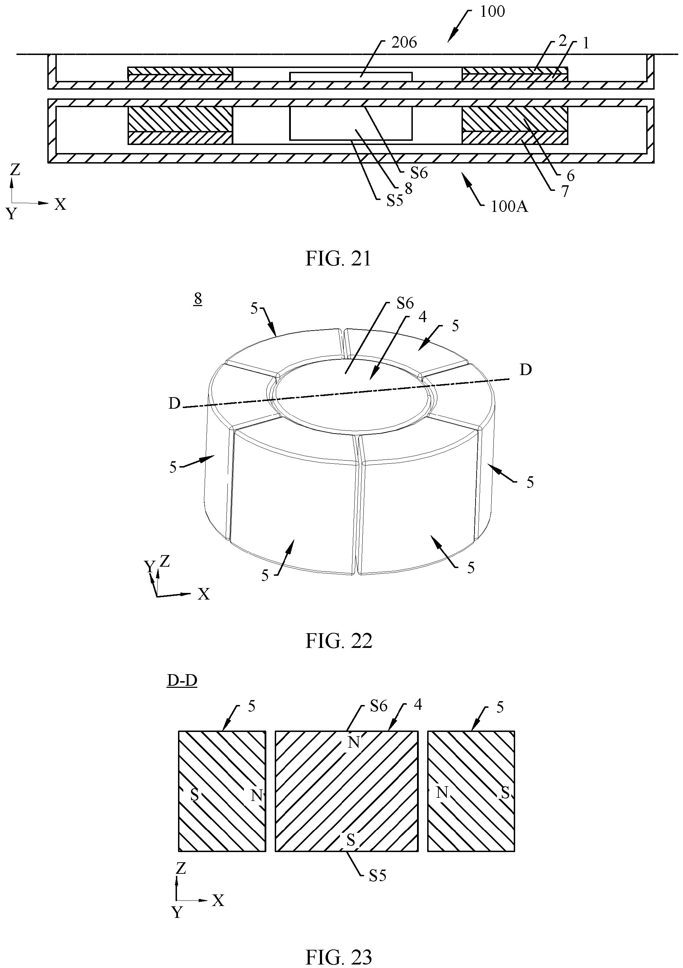

Refer to FIG. 19 to FIG. 21. FIG. 19 is a space diagram of a charger 100A according to some embodiments of this application. FIG. 20 is a schematic diagram of a cross-sectional structure of the charger 100A shown in FIG. 19 taken along line C-C. FIG. 21 is a schematic diagram of a structure of the charger 100A shown in FIG. 20 during charging the electronic device 100. The charger 100A includes a housing 0, and a second coil module 6, a second magnetic isolation sheet 7, and a second magnet 8 disposed in the housing 0.

It may be understood that FIG. 19 and FIG. 20 schematically show some components included in the charger 100A. The actual shapes, sizes, positions, and configurations of these components are not limited in FIG. 19 and FIG. 20. In other embodiments, the charger 100A may further include a voltage conversion unit that converts a commercial household alternating current (alternating current, AC) into an alternating current voltage having a specific frequency.

The second coil module 6 is a main body for transmitting electricity, and the second coil module 6 is a conductive wire wound along a circular extension track. The second coil module 6 is configured to charge in cooperation with the first coil module 1 in the electronic device 100. A structure of the second coil module 6 may be the same as or different from the structure of the first coil module 1. This is not specifically limited herein.

The second magnetic isolation sheet 7 is stacked with the second coil module 6. In other words, the second magnetic isolation sheet 7 is parallel to a plane where the circular extension track of the conductive wire in the second coil module 6 is located. There may be a spacing between the second magnetic isolation sheet 7 and the second coil module 6, or the second magnetic isolation sheet 7 and the second coil module 6 may be in direct contact. The second magnetic isolation sheet 7 is used as a shielding sheet to shield leakage flux or electromagnetic waves on an outer surface of the second magnetic isolation sheet 7, to improve a power transmission capability of a side of the second coil module 6 facing away from the second magnetic isolation sheet 7.

An orthographic projection of the second magnet 8 on a plane where the second coil module 6 is located is located in an area surrounded by a coil in the second coil module 6. The plane where the second coil module 6 is located is the plane where the circular extension track of the conductive wire in the second coil module 6 is located. The second magnet 8 may be disposed in an inner hole of the second coil module 6, or in another location, such as embedded in the housing. This is not specifically limited herein.

The second magnet 8 is configured to attract the first magnet 206 to implement alignment between the second coil module 6 and the first coil module 1. To ensure magnetic attraction of the second magnet 8, a volume of the second magnet 8 is large and magnetic field strength is also large. In the electronic device 100, due to limited internal space, the first magnetic isolation sheet 2 tends to be thinner. Smaller thickness of the magnetic isolation sheet indicates lower magnetic saturation strength. When magnetic field strength around the magnetic isolation sheet reaches the magnetic saturation strength, the magnetic isolation sheet is to lose a magnetic isolation capability. Based on this, in a process of the charger 100A charging in cooperation with the small electronic device 100, the first magnetic isolation sheet 2 is easily saturated under a magnetic field of the second magnet 8, causing the first magnetic isolation sheet 2 to lose the magnetic isolation capability.

To avoid the foregoing problem, the following mainly describes a structure of the second magnet 8.

Refer to FIG. 22 and FIG. 23. FIG. 22 is a space diagram of a second magnet 8 according to some embodiments of this application. FIG. 23 is a schematic diagram of a cross-sectional structure of the second magnet 8 shown in FIG. 22 taken along line D-D. The second magnet 8 includes a central magnet 4 and an outer-ring magnet 5. Structures of the central magnet 4 and the outer-ring magnet 5 include, but are not limited to, permanent magnets and electromagnets. This embodiment and the following embodiments are described by using an example in which the central magnet 4 and the outer-ring magnet 5 are permanent magnets. This cannot be regarded as a special limitation on this application.

The central magnet 4 includes a fifth surface S5 and a sixth surface S6 opposite to each other. When the second magnet 8 is used in the charger 100A shown in FIG. 19 and FIG. 20, a direction from the fifth surface S5 to the sixth surface S6 is consistent with a direction from the second magnetic isolation sheet 7 to the second coil module 6. In this way, during charging, the sixth surface S6 faces the first magnet 206 in the electronic device 100, and the fifth surface S5 faces away from the first magnet 206 in the electronic device 100.

Based on this, a magnetizing direction of the central magnet 4 is parallel to the direction from the fifth surface S5 to the sixth surface S6. In other words, the central magnet 4 is magnetized in a height direction of the charger. It may be learned that the magnetizing direction described in this embodiment and the following embodiments is a direction from an N pole to an S pole, or from the S pole to the N pole. Specifically, refer to FIG. 23. An end of the fifth surface S5 may be an S pole, and an end of the sixth surface S6 may be an N pole. In other embodiments, the end of the fifth surface S5 may alternatively be an N pole, and the end of the sixth surface S6 may be an S pole.

The outer-ring magnet 5 is located on a peripheral side of the magnetizing direction of the central magnet 4, the outer-ring magnet 5 is magnetized from one end away from the central magnet 4 to an end facing the central magnet 4, and a magnetic pole of the end of the outer-ring magnet 5 facing the central magnet 4 is the same as a magnetic pole of an end of the central magnet 4 where the sixth surface S6 is located. In the embodiment shown in FIG. 23, the end of the sixth surface S6 on the central magnet 4 is an N pole, an end of the outer-ring magnet 5 facing the central magnet 4 is also an N pole, and an end of the outer-ring magnet 5 away from the central magnet 4 is an S pole.

In other embodiments, when the end of the fifth surface S5 on the central magnet 4 is also an N pole and the end of the sixth surface S6 is an S pole, the end of the outer-ring magnet 5 facing the central magnet 4 is also an S pole, and the end of the outer-ring magnet 5 away from the central magnet 4 is an N pole.

In this way, the second magnet 8 can concentrate magnetic field directions to avoid magnetic field diffusion, reduce an impact of a magnetic field on the first magnetic isolation sheet 2, and avoid magnetic saturation of the first magnetic isolation sheet 2 due to an excessive magnetic field at a location of the first magnetic isolation sheet 2, so that the first magnetic isolation sheet 2 can be prevented from losing a magnetic isolation capability. In addition, a thickness of the first magnetic isolation sheet 2 can be reduced to reserve more height design space for the first coil module 1, so as to increase a quantity of layers of a coil board in the first coil module 1 to facilitate increasing a quantity of turns of the coil, thereby improving charging efficiency.

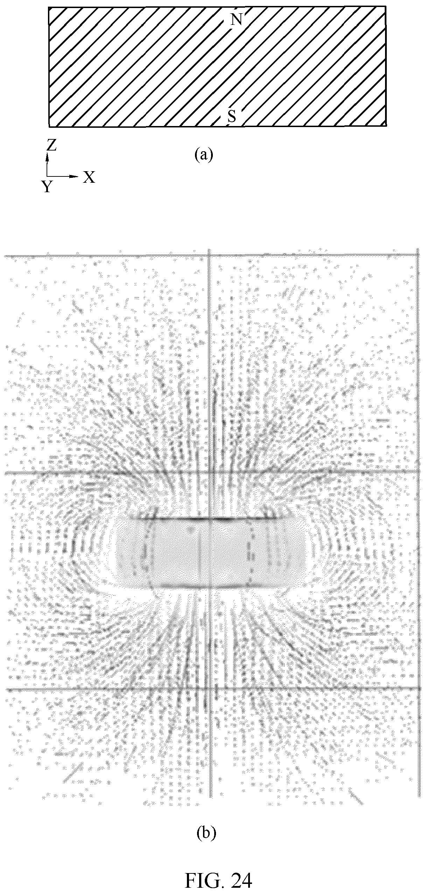

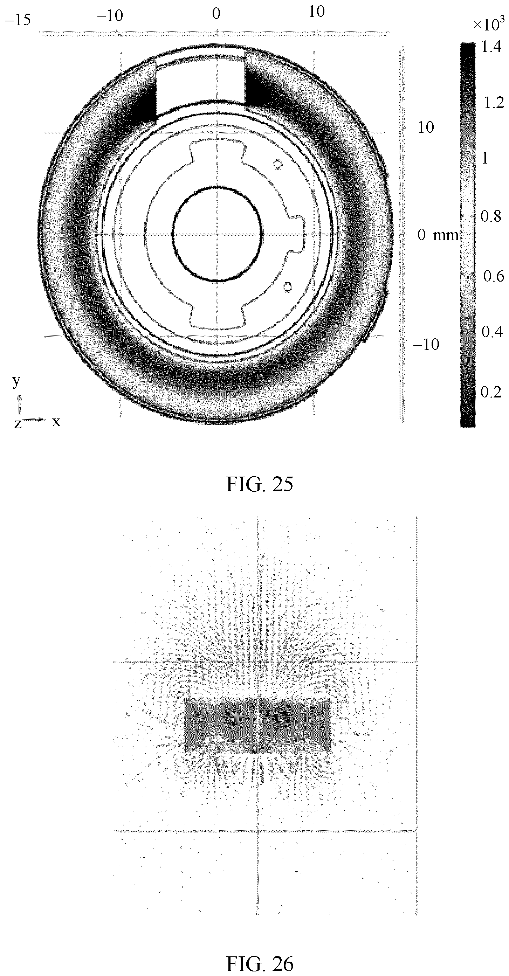

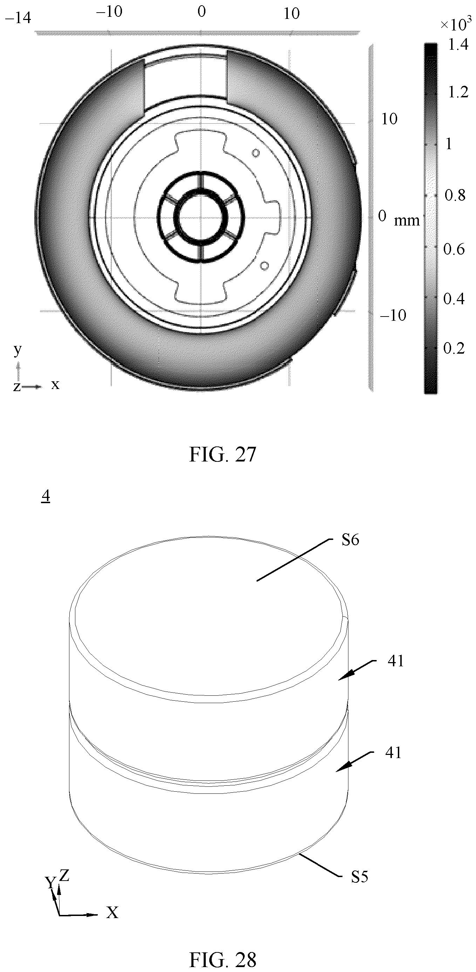

The following further describes the foregoing technical effect with reference to a simulation result. Refer to FIG. 24 to FIG. 27. FIG. 24 is a diagram of magnetic pole distribution and magnetic field distribution of a conventional magnet according to some embodiments of this application. Specifically, section (a) in FIG. 24 is a diagram of the magnetic pole distribution of the entire conventional magnet, and section (b) in FIG. 24 is a diagram of the magnetic field distribution of the entire conventional magnet. FIG. 25 is a diagram of magnetic field distribution of the first magnetic isolation sheet 2 when the second magnet 8 in the charger 100A in a charging system shown in FIG. 21 is of a conventional structure shown in FIG. 24. FIG. 26 is a diagram of magnetic field distribution of the second magnet 8 shown in FIG. 23. FIG. 27 is a diagram of magnetic field distribution of the first magnetic isolation sheet 2 when the second magnet 8 in the charger 100A in a charging system shown in FIG. 21 is of an improved structure shown in FIG. 23. It may be learned from comparison between FIG. 26 and section (b) in FIG. 24, the magnetic field of the second magnet 8 provided in this application is more concentrated. In addition, in comparison between FIG. 25 and FIG. 27, when the second magnet 8 provided in this application is used in the charger 100A in the charging system shown in FIG. 21, the magnetic field strength of the first magnetic isolation sheet 2 in the electronic device 100 is lower, and a possibility of causing magnetic saturation is smaller.

Moreover, in addition to the foregoing technical effects that the second magnet 8 in this application has, because the magnetic pole of the end of the outer-ring magnet 5 facing the central magnet 4 is the same as a magnetic pole of the end of the central magnet 4 where the sixth surface S6 is located, the sixth surface S6 is a magnetic field enhancement surface. Based on this, because the sixth surface S6 faces the magnet in the charger, magnetic attraction between the magnet 206 and the magnet in the charger can be enhanced to ensure positioning accuracy.

In the foregoing embodiment, the central magnet 4 may be a whole magnet, or may include a plurality of magnet units stacked in the Z-axis direction. In the embodiment shown in FIG. 23, the central magnet 4 is a whole magnet, and this structure is simple and easy to implement.

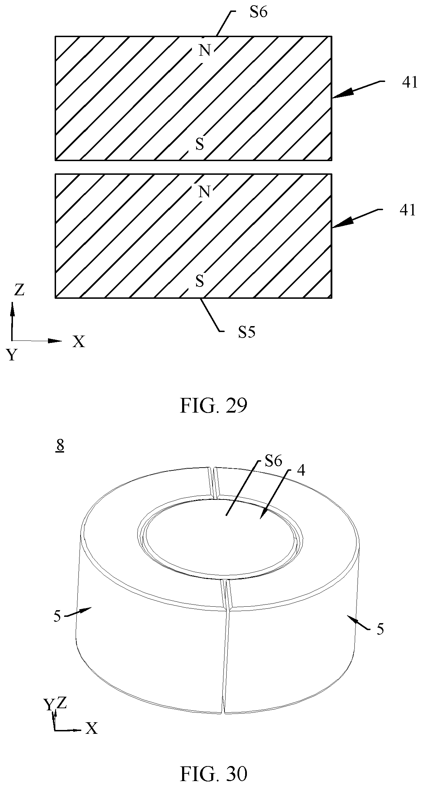

In other embodiments, refer to FIG. 28 and FIG. 29. FIG. 28 is a space diagram of a central magnet 4 according to some other embodiments of this application. FIG. 29 is a diagram of magnetic pole distribution of the central magnet 4 shown in FIG. 28. In this embodiment, the central magnet 4 includes two first magnet units 41 stacked in the Z-axis direction, and magnetizing directions of the two first magnet units 41 are the same. In this way, difficulty in processing the central magnet 4 can be reduced.

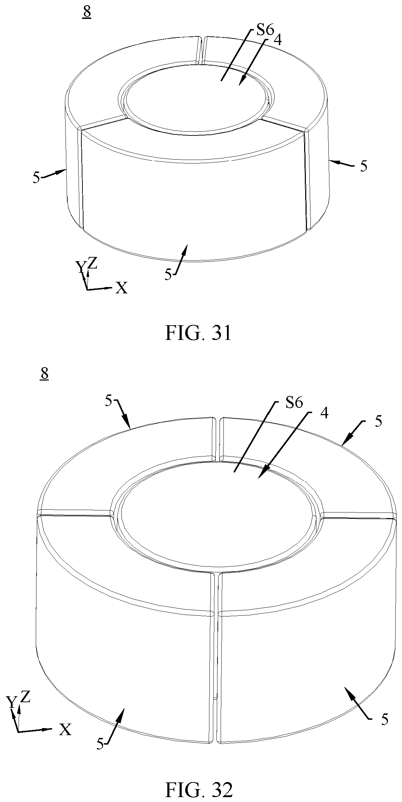

In the embodiment shown in FIG. 22, there are a plurality of outer-ring magnets 5, and the plurality of outer-ring magnets 5 are arranged around the magnetizing direction of the central magnet 4. This structure is simple and the outer-ring magnet 5 is less difficult to form. Specifically, a quantity of outer-ring magnets 5 may be 6 as shown in FIG. 22, or may be 2 as shown in FIG. 30, 3 as shown in FIG. 31, 4 as shown in FIG. 32, or the like.

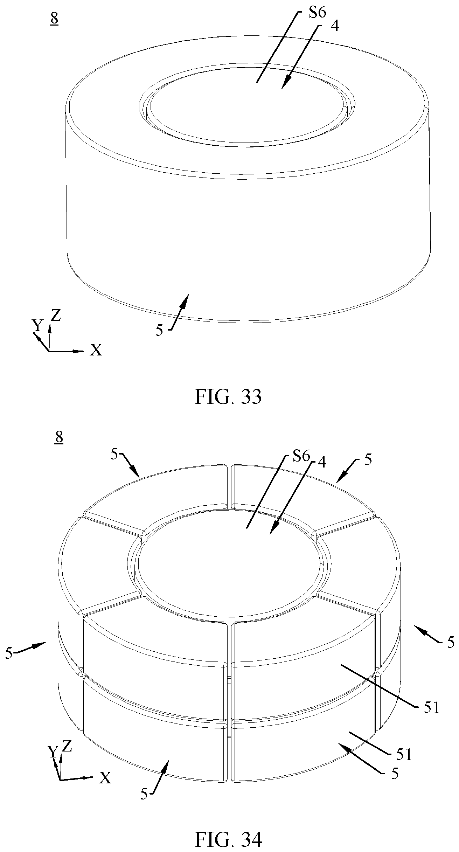

In other embodiments, FIG. 33 is a space diagram of a second magnet 8 according to some other embodiments of this application. In this embodiment, an outer-ring magnet 5 may alternatively be a ring magnet arranged around a central magnet 4. This structure is simple and is less difficult to assembly.

Based on the outer-ring magnet 5 described in any one of the foregoing embodiments, each outer-ring magnet 5 may be a structural unit, or may include magnet units stacked in the Z-axis direction.

In some embodiments, refer to FIG. 34. FIG. 34 is a space diagram of a second magnet 8 according to some other embodiments of this application. In this embodiment, each outer-ring magnet 5 includes two second magnet units 51 stacked in the Z-axis direction. Magnetizing directions of the two second magnet units 51 are the same. In this way, difficulty in processing the outer-ring magnet 5 can be reduced.

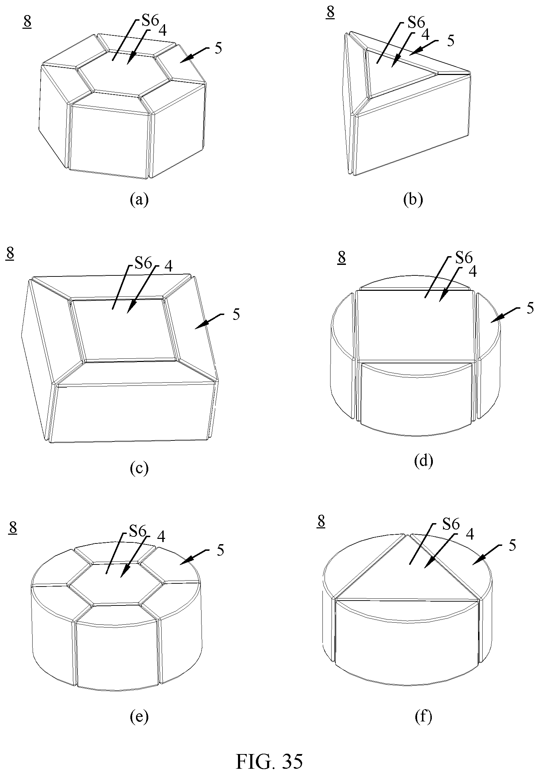

In the foregoing embodiment, the second magnet 8 and a central magnet 4 in the second magnet 8 are roughly cylindrical, and the outer-ring magnet 5 is arc-shaped or annular. Certainly, the second magnet 8, the central magnet 4, and the outer-ring magnet 5 are not limited to these shapes. For example, FIG. 35 is a space diagram of six second magnets 8 according to some other embodiments of this application. The second magnet 8 as a whole and a central magnet 4 in the second magnet 8 may alternatively be in a shape of a hexagonal prism as shown in section (a) in FIG. 35, a triangular prism as shown in section (b) in FIG. 35, or a cubic prism as shown in section (c) in FIG. 35. This is not specifically limited herein. Alternatively, the second magnet 8 as a whole is in a shape of a cylinder, and the central magnet 4 in the second magnet 8 is in another shape. For example, focus on section (d), section (e), and section (f) in FIG. 35. The second magnet 8 as a whole is in a shape of a cylinder, and the central magnet 4 in the second magnet 8 is in a shape of a cubic prism, a hexagonal prism, and a triangular prism, respectively.

In the descriptions of this specification, the specific features, structures, materials, or characteristics may be combined in a proper manner in any one or more of the embodiments or examples.

Finally, it should be noted that the foregoing embodiments are merely used for describing the technical solutions of this application, but are not intended to limit this application. Although this application is described in detail with reference to the foregoing embodiments, it should be appreciated by a person skilled in the art that, modifications may still be made to the technical solutions described in the foregoing embodiments, or equivalent replacements may be made to the part of the technical features; and these modifications or replacements do not cause the essence of corresponding technical solutions to depart from the spirit and scope of the technical solutions in embodiments of this application.

**Claims**

1. An electronic device, comprising:

    a first coil module for wireless charging, comprising a first coil board, wherein the first coil board comprises:

       a first terminal and a second terminal;
       a first coil substrate, comprising a first surface and a second surface facing away from each other;
       a first coil layer, disposed on the first surface, and comprising a first coil part and a second coil part disposed on a periphery of the first coil part, wherein the first coil part comprises at least one turn of a first coil, and an innermost turn of the first coil in the first coil part is an innermost turn of a coil in the first coil layer; and
       a second coil layer, disposed on the second surface, and comprising a third coil part and a fourth coil part disposed on a periphery of the first coil part, wherein the third coil part comprises at least one turn of a third coil, an innermost turn of the third coil in the third coil part is an innermost turn of a coil in the second coil layer, at least part of the third coil part is connected in parallel with at least part of the first coil part to form a first parallel body, and the second coil part, the fourth coil part, and the first parallel body are connected in series between the first terminal and the second terminal, wherein
       an inner diameter of the first coil layer is D11, an outer diameter of the first coil layer is D12, and an outer diameter D1 of the first coil part satisfies a condition: $D11 \leq D1 \leq (D11+D12)/2$, and an inner diameter of the second coil layer is D21, an outer diameter of the second coil layer is D22, and an outer diameter D3 of the third coil part satisfies a condition: $D21 \leq D3 \leq (D21+D22)/2$.

2. The electronic device according to claim 1, wherein the at least one turn of the first coil respectively corresponds to the at least one turn of the third coil, each turn of the first coil is connected in parallel with a corresponding turn of the third coil to form the first parallel body, and the second coil part, the fourth coil part, and at least one first parallel body are connected in series between the first terminal and the second terminal.

3. The electronic device according to claim 2, wherein the at least one turn of the first coil and the at least one turn of the third coil are equal in quantity and in one-to-one correspondence, and each turn of the first coil is connected in parallel with the corresponding turn of the third coil to form the first parallel body.

4. The electronic device according to claim 3, wherein the at least one turn of the first coil is separated from each other; and
the at least one turn of the third coil is electrically connected from inside to outside, and two ends of each turn of the first coil are electrically connected to two ends of the corresponding turn of the third coil, respectively.

5. The electronic device according to claim 4, wherein the two ends of the third coil part are respectively a first end and a second end, the first end is located on an outermost turn of the third coil in the third coil part, the first end is electrically connected to an end of the fourth coil part facing the third coil part, and an end of the fourth coil part away from the third coil part is electrically connected to the first terminal; and
the second end is located on the innermost turn of the third coil in the third coil part, the second end is electrically connected to an end of the second coil part facing the first coil part, and an end of the second coil part away from the first coil part is electrically connected to the second terminal.

6. The electronic device according to any one of claims 3 to 5, wherein the first coil part comprises a first turn of the first coil, and the third coil part comprises a second turn of the third coil; the first turn of the first coil comprises a first coil segment and a second coil segment, and the first coil segment and the second coil segment are arranged in a peripheral direction of the first turn of the first coil;

the first coil segment comprises a first inner coil part and a first outer coil part, and the first outer coil part is located outside the first inner coil part;
the second coil segment comprises a second inner coil part and a second outer coil part, and the second outer coil part is located outside the second inner coil part;
the second turn of the third coil comprises a third coil segment and a fourth coil segment, the third coil segment corresponds to the first coil segment, and the fourth coil segment corresponds to the second coil segment;
the third coil segment comprises a third inner coil part and a third outer coil part, and the third outer coil part is located outside the third inner coil part;
the fourth coil segment comprises a fourth inner coil part and a fourth outer coil part, and the fourth outer coil part is located outside the fourth inner coil part;
an end of the first outer coil part facing the second outer coil part is electrically connected to an end of the second inner coil part facing the first inner coil part, an end of the third outer coil part facing the fourth outer coil part is electrically connected to the end of the first outer coil part facing the second outer coil part, and an end of the fourth inner coil part facing the third inner coil part is electrically connected to the end of the second inner coil part facing the first inner coil part; and
an end of the third inner coil part facing the fourth inner coil part is electrically connected to an end of the fourth outer coil part facing the third outer coil part, an end of the first inner coil part facing the second inner coil part is electrically connected to the end of the third inner coil part facing the fourth inner coil part, and an end of the second outer coil part facing the first outer coil part is electrically connected to the end of the fourth outer coil part facing the third outer coil part.

7. The electronic device according to any one of claims 1 to 6, wherein the first coil layer further comprises a fifth coil part disposed on a periphery of the second coil part, the fifth coil part comprises at least one turn of a fifth coil, and an outermost turn of the fifth coil in the fifth coil part forms an outermost turn of the coil in the first coil layer;

the second coil further comprises a sixth coil part disposed on a periphery of the fourth coil part, the sixth coil part comprises at least one turn of a sixth coil, and an outermost turn of the sixth coil in the sixth coil part forms an outermost turn of the coil in the second coil layer;

at least part of the sixth coil part is connected in parallel with at least part of the fifth coil part to form a second parallel body, and the second coil part, the fourth coil part, the first parallel body, and the second parallel body are connected in series, wherein

an inner diameter D5 of the fifth coil part satisfies a condition: $(D11+D12)/3<DS<D12$, and an inner diameter D6 of the sixth coil part satisfies a condition: $(D21+D22)/3\leq D6\leq D22$.

8. The electronic device according to claim 7, wherein the at least one turn of the fifth coil respectively corresponds to the at least one turn of the sixth coil, and each turn of the fifth coil is connected in parallel with a corresponding turn of the sixth coil to form the second parallel body; and

the second coil part, the fourth coil part, the first parallel body, and at least one second parallel body are connected in series between the first terminal and the second terminal.

9. The electronic device according to claim 8, wherein the at least one turn of the fifth coil and the at least one turn of the sixth coil are equal in quantity and in one-to-one correspondence, and each turn of the fifth coil is connected in parallel with the corresponding turn of the sixth coil to form the second parallel body.

10. The electronic device according to claim 9, wherein the at least one turn of the fifth coil is separated from each other; and

the at least one turn of the sixth coil is electrically connected from inside to outside, and two ends of each turn of the fifth coil are electrically connected to two ends of the corresponding turn of the sixth coil, respectively.

11. The electronic device according to claim 10, wherein the two ends of the sixth coil part are respectively a fourth end and a fifth end, the fourth end is located on an innermost turn of the sixth coil in the sixth coil part, and the fourth end is electrically connected to an end of the fourth coil part away from the third coil part; and

the fifth end is located on the outermost turn of the sixth coil in the sixth coil part, and the fifth end is electrically connected to the first terminal.

12. The electronic device according to any one of claims 1 to 11, wherein the first terminal and the second terminal are disposed on the first surface and located outside the first coil layer.

13. The electronic device according to any one of claims 1 to 11, wherein the first terminal and the second terminal are disposed on the first surface and located inside the first coil layer.

14. The electronic device according to any one of claims 1 to 13, wherein the first coil module further comprises: a second coil board, wherein the second coil board is stacked with the first coil board, the second coil board comprises a third terminal and a fourth terminal, and the third terminal is electrically connected to the second terminal.

15. The electronic device according to claim 14, wherein the third terminal and the second terminal are integrally formed; or the third terminal is electrically connected to the second terminal through a solder joint.

16. The electronic device according to any one of claims 1 to 15, wherein the electronic device further comprises: a first magnetic isolation sheet, wherein the first magnetic isolation sheet is located at one side of the first coil module and is stacked with the first coil module.

17. The electronic device according to claim 16, wherein relative magnetic permeability of a material of the first magnetic isolation sheet is greater than or equal to 100.

18. A wireless charging system, comprising:

an electric device, wherein the electric device is the electronic device according to any one of claims 1 to 17; and
a charger, wherein the charger comprises a second coil module, and the second coil module is configured to charge in cooperation with the first coil module.

19. The wireless charging system according to claim 18, wherein the charger further comprises: a second magnetic isolation sheet, wherein the second magnetic isolation sheet is located at one side of the second coil module and is stacked with the second coil module.

20. The wireless charging system according to claim 19, wherein the charger further comprises:
a second magnet, wherein an orthographic projection of the second magnet on a plane where the second coil module is located is located in an area surrounded by a coil in the second coil module.

21. The wireless charging system according to claim 20, wherein the second magnet comprises a central magnet and an outer-ring magnet, the central magnet comprises a fifth surface and a sixth surface opposite to each other, and a direction from the fifth surface to the sixth surface is consistent with a direction from the second magnetic isolation sheet to the second coil module; and

a magnetizing direction of the central magnet is parallel to the direction from the fifth surface to the sixth surface; and
the outer-ring magnet is located on a peripheral side of the magnetizing direction of the central magnet, the outer-ring magnet is magnetized from one end away from the central magnet to an end facing the central magnet, and a magnetic pole of the end of the outer-ring magnet facing the central magnet is the same as a magnetic pole of an end of the central magnet where the sixth surface is located.

22. The wireless charging system according to claim 21, wherein there are a plurality of outer-ring magnets, and the plurality of outer-ring magnets are arranged around the magnetizing direction of the central magnet.

FIG. 1

FIG. 2

20

202

203

201

207

206 h 205

Z
Y
X

204

FIG. 3

205

h

W1

3

W2

C

1 2

Z
Y
X

FIG. 4

205

FIG. 5

FIG. 6

1

A

d2  d4

A

W2

W1

d3

d1

Y

Z

X

FIG. 7

1

11

S1  S2

d2 d1

W1

13

12

S4  S3

d4

W2

d3

Y

Z

X

FIG. 8

FIG. 9

1

FIG. 10

B-B

FIG. 11

Uneven current density
area

Uneven current density
area

FIG. 12

FIG. 13

FIG. 14

A-A

FIG. 15

<u>12</u>

FIG. 16

FIG. 17

Freq-100 kHz, PortName-1 Current density: $\mathrm{sqrt}(\mathrm{mfcoJx}^2 + \mathrm{mfcoJy}^2 + \mathrm{mfcoJz}^2)$ $(\mathrm{A/m}^2)$

FIG. 18

100A

FIG. 19

C-C

FIG. 20

FIG. 21

FIG. 22

D-D

FIG. 23

(a)

(b)

FIG. 24

FIG. 25

FIG. 26

FIG. 27

FIG. 28

S6

N

41

S

N

41

S

Z

X

Y

S5

FIG. 29

8

S6  4

5

5

Y Z

X

FIG. 30

FIG. 31

FIG. 32

FIG. 33

FIG. 34

FIG. 35

## INTERNATIONAL SEARCH REPORT

| International application No. |
|---|
| **PCT/CN2023/112931** |

| A. | CLASSIFICATION OF SUBJECT MATTER |
|---|---|

H02J50/00(2016.01)i

According to International Patent Classification (IPC) or to both national classification and IPC

| B. | FIELDS SEARCHED |
|---|---|

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNTXT ENTXT ENTXTC DWPI CNKI: 线圈, 端子, 表面, 外, 内, 线圈层, 并联, 串联, 内径, 外径; coil, terminal+, surface, out+, inner, coil layer? , parallel, ser+, inner diameter, outer diameter

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112002540 A (SCIENCE AND EDUCATION CITY BRANCH OF AAC NEW ENERGY DEVELOPMENT (CHANGZHOU) CO., LTD.) 27 November 2020 (2020-11-27) description, paragraphs 34-57, and figures 1-9 | 1-22 |
| A | CN 109036803 A (SHANGHAI AMPHENOL AIRWAVE COMMUNICATION ELECTRONICS CO., LTD.) 18 December 2018 (2018-12-18) entire document | 1-22 |
| A | CN 109961942 A (HUAWEI TECHNOLOGIES CO., LTD.) 02 July 2019 (2019-07-02) entire document | 1-22 |
| A | CN 115020077 A (HONOR TERMINAL CO., LTD.) 06 September 2022 (2022-09-06) entire document | 1-22 |
| A | US 2021249188 A1 (SAMSUNG ELECTRONICS CO., LTD.) 12 August 2021 (2021-08-12) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 September 2023** | **17 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/112931**

| Patent document cited in search report | | | Publication date (day/month/year) | Patent family member(s) | | | Publication date (day/month/year) |
|---|---|---|---|---|---|---|---|
| CN | 112002540 | A | 27 November 2020 | CN | 112002540 | B | 03 May 2022 |
| | | | | WO | 2022007226 | A1 | 13 January 2022 |
| CN | 109036803 | A | 18 December 2018 | | None | | |
| CN | 109961942 | A | 02 July 2019 | US | 2021142942 | A1 | 13 May 2021 |
| | | | | EP | 3806117 | A1 | 14 April 2021 |
| | | | | EP | 3806117 | A4 | 08 September 2021 |
| | | | | WO | 2020029664 | A1 | 13 February 2020 |
| | | | | CN | 109961942 | B | 16 June 2020 |
| | | | | IN | 202137000811 | A | 12 February 2021 |
| CN | 115020077 | A | 06 September 2022 | CN | 115020077 | B | 02 May 2023 |
| | | | | HK | 40078272 | A0 | 31 March 2023 |
| | | | | WO | 2023098170 | A1 | 08 June 2023 |
| US | 2021249188 | A1 | 12 August 2021 | KR | 20210100871 | A | 18 August 2021 |
| | | | | WO | 2021157932 | A1 | 12 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211641708